# EUROPÄISCHE PATENTSCHRIFT

(11) **EP 3 656 752 B1**
(45) Veröffentlichungstag und Bekanntmachung des Hinweises auf die Patenterteilung: **04.03.2026**
(21) Anmeldenummer: 18401096.5
(22) Anmeldetag: 22.11.2018
(51) Int. Cl.: C05B 17/00, C05D 9/02, C05D 9/00, C05F 3/00, C05F 7/00

(54) **NÄHRSTOFFGRANULAT, DESSEN HERSTELLUNG, EINE VORRICHTUNG ZU DESSEN HERSTELLUNG UND SEINE VERWENDUNG**
NUTRITIONAL GRANULAR MATERIAL, PRODUCTION OF SAME, DEVICE FOR PRODUCING SAME AND USE OF SAME
GRANULÉS DE SUBSTANCE NUTRITIVE, LEUR FABRICATION, LEUR DISPOSITIF DE FABRICATION ET LEUR UTILISATION

(43) Veröffentlichungstag der Anmeldung: 27.05.2020
(73) Patentinhaber: Pontes pabuli GmbH, 04107 Leipzig (DE)
(72) Erfinder: Hager, Frank Thoralf, 04109 Leipzig (DE)
(74) Vertreter: Hertin und Partner Rechts- und Patentanwälte PartG mbB

(56) Entgegenhaltungen:
- EP-A1- 3 037 396
- EP-A1- 3 293 165
- EP-A1- 3 612 505
- BE-A- 896 150
- LU-A1- 83 909
- DATABASE WPI Week 198240, Derwent World Patents Index; AN 1982-84870E, XP002791004
- DATABASE WPI Week 201659, Derwent World Patents Index; AN 2016-54780A, XP002791005
- DATABASE WPI Week 200974, Derwent World Patents Index; AN 2009-Q46723, XP002791006

## Beschreibung

Die Erfindung betrifft ein Nährstoffgranulat, dessen Herstellung, eine Vorrichtung zu dessen Herstellung, sowie seine Verwendung in der Land- und/oder Landwirtschaft, oder im Gartenbau.

### Stand der Technik:

Durch landwirtschaftliche Nutzung werden dem Boden mineralische Rohstoffe, wie beispielsweise phosphorhaltige Verbindungen, entzogen, welche durch anschließende Zufuhr mineralischer Dünger wieder ausgeglichen werden müssen. Mit der stofflichen und energetischen Nutzung von Biomasse, wie beispielsweise aus Haushaltsabfallen oder Klärschlamm, ist ein Entzug von Nährstoffen und erhebliche Mengen an organischer Substanz aus den natürlichen Stoffkreisläufen verbunden. Die Erhaltung der Fruchtbarkeit des Bodens durch den Einsatz von künstlichem Mineraldünger aus fossilen Ressourcen ist ökologisch kritisch zu bewerten, zum einen aufgrund des umweltzerstörerischen Abbaus und zum anderen aufgrund des Schwermetalleintrags auf die Böden durch Mineraldünger. Phosphor ist ein limitierter Rohstoff und seine effiziente Nutzung für einen fruchtbaren Boden ist vor dem Hintergrund einer wachsenden Weltbevölkerung von großer Bedeutung. Unter Gesichtspunkten der Nachhaltigkeit rückt die Schließung von natürlichen Nährstoffkreisläufen immer mehr in den Vordergrund und bietet zudem eine einheimische, bisher nur bedingt genutzte Rohstoffquelle.

Organische Reststoffe, wie beispielsweise Klärschlamm, Gärreste oder Gülle, sind prinzipiell eine kostengünstige und nachhaltige Alternative zu mineralischen Düngern und damit zur Schließung des Nährstoffkreislaufs. So werden diese organischen Reststoffe zum Teil auch noch immer direkt auf Felder ausgebracht. Seit geraumer Zeit sinkt die Akzeptanz für diesen Verwertungsweg jedoch progressiv, da das direkte Ausbringen zu unerwünschter Geruchsbelästigung führt und die hiermit verbundenen Kreisläufe in Verdacht stehen, zu einer unerwünschten Aufkonzentrierung bestimmter Schadstoffe zu führen, wie beispielsweise perfluorierter Tenside (PFT) und unterschiedlicher Schwermetalle. Klärschlamm, der keiner hygienisierenden Behandlung unterworfen wurde, kann zudem eine Vielzahl seuchen- und phytohygienisch relevanter Krankheitserreger enthalten, wie Bakterien, Viren, Parasiten und Wurmeier. Sollen die organischen Reststoffe in der Landwirtschaft verwertet werden, so besteht grundsätzlich die Gefahr, dass Krankheitserreger über Nahrung und Futtermittel zu Mensch und Tier gelangen und diese damit gefährden.

Aktuell gewinnt die thermische Verwertung dieser organischen Reststoffe erheblich an Bedeutung. Aschen aus der thermischen Verwertung oder Verbrennung organischer Reststoffe sind aufgrund des hohen Gehalts an Nährstoffen, wie beispielsweise Phosphor (P), geeignete Rohstoffquellen. Aufgrund der schlechten Pflanzenverfügbarkeit des in den Aschen enthaltenen Phosphors (P) ist eine direkte Verwendung der Aschen als Düngemittel kaum möglich. Deshalb werden aktuell solche Aschen zumeist deponiert oder im Landschaftsbau verwendet und stehen somit den Stoffkreisläufen nachteiligerweise nicht mehr als Rohstoffquelle zur Verfügung.

Im Stand der Technik sind unterschiedliche Verfahren zur stofflichen Verwertung von phosphorhaltigen Aschen, beispielsweise aus Klärschlamm, bekannt. Die Verfahren basieren zumeist auf dem Rohstoff Asche, wobei der P-Gehalt in der Asche möglichst hoch sein sollte. Die Verfahren unterscheiden sich bezüglich der P-Abscheidung (Säure und Fällmittel), dem Recyclingprodukt und der Art der Schwermetallabscheidung. Die Verfahren zur Gewinnung von Phosphat aus Klärschlamm-Aschen können allgemein in thermochemische, thermoelektrische und nasschemische Ansätze untergliedert werden, wobei thermochemische Ansätze vorzugsweise unterhalb des Ascheschmelzpunktes <1.000°C und thermoelektrische Ansätze vorzugsweise oberhalb des Ascheschmelzpunktes >1.000 °C vorliegen.

Bei den nasschemischen Verfahren werden zahlreiche unterschiedliche Konzepte verfolgt, wobei generell zwischen Verfahren, bei denen die Säure nur mit der Asche vermischt und daraus Düngemittel hergestellt wird, und Verfahren bei welchem Phosphor aus der Asche extrahiert und damit in die flüssige Phase gebracht wird, unterschieden wird.

Aus DE 10 2010 034 042 B4 ist ein Verfahren bekannt, bei dem aus der zerkleinerten Asche aus der Monoverbrennung kommunaler Klärschlämme, gegebenenfalls zusammen mit weiteren Komponenten, wie Alkalisalzen und/oder anderen Nährstoffen, durch gemeinsames Vermischen ein Gemenge hergestellt wird, zu dem eine bestimmte Menge an Mineralsäure, bevorzugt Orthophosphorsäure, zugefügt wird. Durch die Behandlung mit Mineralsäure wird das in der Asche nur als citratlösliche Phosphat in ein wasserlösliches Phosphat umgewandelt. Das resultierende Düngemittel ist ein phosphat- und Mehrnährstoff-Düngemittel, das als Ergebnis des Herstellungsprozesses in granulierter Form vorliegt.

Problematisch bei diesem Verfahren ist die Kopplung der Asche-Säure-Reaktion mit der Granulation. Der Anteil an verdünnter oder unverdünnter Mineralsäure dient bei dem Verfahren nicht nur der Reaktion zur Erhöhung der Löslichkeit des Phosphates aus der Asche, sondern auch gleichzeitig zur Einstellung der erforderlichen Bindewirkung bei der Granulation, da das Gemisch aus Asche, gegebenenfalls weiteren Komponenten und der Mineralsäure bei laufender Reaktion direkt granuliert wird. Im Grunde entspricht die verdünnte oder unverdünnte Mineralsäure dem Feuchtegehalt, der zur Ausbildung von Granulaten in den beispielsweise angegebenen Doppelwellenpaddelmischer, Chargenmischer, Durchlaufmischer oder auch Granulierteller notwendig ist.

Diese verhältnismäßig geringe flüssige Phase, die für eine gute Granulation erforderlich ist, führt jedoch zu erheblichen verfahrenstechnischen Problemen, da beim Mischen der phosphathaltigen Aschen mit der Mineralsäure spontan ablaufende und zum Teil sehr exotherme Reaktionen stattfinden. Dies erschwert die Granulation erheblich, da beispielsweise durch die heftige exotherme Reaktion die sich bildenden Granulate oberflächlich abtrocknen, verkrusten und damit aufplatzen. Zudem ist das Gemisch aus Asche mit Säure oft besonders klebrig, was eine stabile Prozessführung deutlich erschwert und oft zu Prozessstörungen durch Anhaftung und Verstopfung von Anlagenteilen führt. Problematisch ist auch, dass Mineralsäuren sehr korrosiv sind und bei dieser Prozessführung viele Anlagenteile (Granuliereinheit, Trocknungseinheit, Verbindungsstrecken) damit in Kontakt kommen und entsprechend geschädigt werden können.

In EP 3 061 741 A1 wird eine Phosphorrecyclingvorrichtung zur Herstellung von einem Phosphat- und Mehrnährstoffdüngemittel beschrieben, bei der die Mischwerkzeuge der Mischvorrichtung und/oder die Granulierfläche der Granuliervorrichtung mindestens teilweise emailliert sind. Die Emaillierung der Mischwerkzeuge soll zu einem verminderten Anbacken des Gemisches aus phosphorhaltiger Asche und die Phosphorsäure führen. Analog zur DE 10 2010 034 042 B4 bietet auch dieses Verfahren keine Lösung für die sehr stark und heftig ablaufenden exothermen Reaktionen mit den oben beschriebenen Schwierigkeiten bei der Granulation.

Aus DE 10 2016 116 633 A1 ist ein Verfahren bekannt, bei dem zuerst eine Suspension aus mindestens einem phosphathaltigen Sekundärrohstoff und mindestens einer Mineralsäure erzeugt wird, dann in der erzeugten Suspension die schwerlöslichen Phosphate des phosphathaltigen Sekundärrohstoffes zumindest teilweise gelöst und/oder in eine wasser- und/oder neutral-ammoniumcitratlösliche Phosphatphase umgewandelt werden und abschließend diese Suspension einer Granulation zugeführt wird, wobei sich das Düngemittelgranulat bildet und wobei der enthaltene P2O5-Gehalt im Düngemittelgranulat größer 75 % neutral-ammoniumcitratlöslich ist. Als verfahrenstechnischer Vorteile wird in dieser Druckschrift beschrieben, dass durch die Erzeugung einer Rohstoffsuspension die beim direkten Zusammenführen der phosphathaltigen Sekundärrohstoffe und der Mineralsäure zum Teil spontan und heftig ablaufende Reaktion durch das Verfahren handhab-, kontrollier- und steuerbar werden sollen. Dabei weisen die in diesem Verfahren erzeugte Suspensionen einen deutlich höheren Wasseranteil auf als im Vergleich zu Verfahren, bei denen die phosphathaltigen Sekundärrohstoffe und verdünnte oder unverdünnte Mineralsäure quasi erdfeucht direkt vermischt und gegebenenfalls granuliert werden (beispielsweise wie in DE 10 2010 034 042 B4 beschrieben). Dieser höhere Wasseranteil soll dabei als Puffer wirken. In diesem Verfahren wird die so erzeugte Suspension einer Granulation zugeführt, wobei sich die Düngemittelgranulate bilden. Nachteil bei dieser Prozessführung ist, dass der hohe Wasseranteil in der Suspension letztlich bei oder nach der Granulation abgetrennt werden muss. Dies kann bei dieser Prozessführung nur thermisch durch Trocknung erfolgen, was jedoch besonders energieintensiv und damit teuer ist. EP 3 293 165 A1, EP 3 037 396 A1 und EP 3 612 505 A1 offenbaren alle Verfahren zur Herstellung von Düngemittelgranulaten aus anorganischen Sekundärphosphaten.

Im Stand der Technik sind auch neuere Verfahren zur Herstellung von Düngergranulaten bekannt, mit denen der Nachteil des hohen thermischen Energieverbrauchs durch die thermische Trocknung des hohen Wasseranteils aus der Suspension überwunden werden soll. Bei diesen Verfahren wird ebenfalls zunächst eine Suspension, im Stand der Technik als Rohstoffdispersion bezeichnet wird, aus einem anorganischen Sekundärphosphat und mindestens einem Reaktionsmittel, z.B. einer Mineralsäure, erzeugt. Allerdings wird ein Teil der flüssigen Phase dieser erzeugten Suspension mechanisch abgetrennt und die Granulierung erfolgt mit dem abgetrennten feuchten Feststoff. Die abgetrennte flüssige Phase wird der erneuten Herstellung einer Rohstoffdispersion zurückgeführt, wobei gegebenenfalls vorhandene Schwermetalle in dieser flüssigen Phase zuvor abgetrennt werden können. Der mechanisch abgetrennte Anteil an flüssiger Phase muss somit nicht thermisch getrocknet werden, was mit einer erheblichen Energieeinsparung im Verfahren verbunden ist. Zudem kann eine Granulation von feuchten Feststoffen typischerweise auf Granuliertellern oder Intensivmischern erfolgen, was deutlich niedriger Betriebskosten mit sich bringen. Nachteilig bei diesen Verfahren ist jedoch, dass die Abtrennung der flüssigen Phase, insbesondere die Fest/Flüssig-Trennung, und die Kreislaufführung der flüssigen Phase aufwendig sind, hohe Investitionen erfordert und damit die Betriebskosten erhöht.

Der vorliegenden Erfindung liegt die Aufgabe zu Grunde, ein wirtschaftliches, ökologisches, flexibles, einfaches und technisch umsetzbares Verfahren zur Herstellung von boden- und/oder pflanzenspezifischen Düngemittel mit exakt einstellbarer Nährstoffzusammensetzung in Granulatform bereitzustellen. Es soll insbesondere dazu geeignet sein, die technologischen Probleme aus dem Stand der Technik lösen. Dazu sollen als Nährstoffquelle anorganisches Sekundärphosphat, wie beispielsweise Klärschlamm-Aschen, eingesetzt werden, wobei das darin enthaltene Phosphat pflanzenverfügbar gemacht werden soll. Es sollen darüber hinaus keine Reststoffe bei dem Verfahren entstehen. Durch das erfindungsgemäße Verfahren sollen verschiedene anorganische Sekundärphosphate effizient und kostengünstig aufbereitet werden können, wobei die typische Schwankungsbreite der Sekundärrohstoffe durch flexibel einsetzbare weitere Nährstoffkomponenten auszugleichen ist, wobei dadurch auch gezielt boden- und pflanzenspezifische Düngerzusammensetzungen einzustellen sind und wobei im daraus resultierendem Düngergranulat ein Großteil des Phosphates in einer gut pflanzenverfügbare Form vorliegen soll.

### Beschreibung der Erfindung:

Die Aufgabe wird durch die Merkmale der unabhängigen Ansprüche gelöst. Zweckmäßige Ausgestaltungen der Erfindung ergeben sich aus den Merkmalen der Unteransprüche. Die Erfindung betrifft insbesondere ein Verfahren zur Herstellung eines Nährstoffgranulats. Außerdem betrifft die Erfindung das so erzeugte Nährstoffgranulate, dessen Verwendung und eine Vorrichtung zur Herstellung des Nährstoffgranulats. Die Aufgabe der Erfindung wird in einem Aspekt der Erfindung durch ein Nährstoffsubstrat in Granulatform (Nährstoffgranulat) gelöst, das mit einem Herstellungsverfahren umfassend die folgenden Schritte herstellbar ist:
a) Erzeugung eines ersten Gemischs mit einem Feuchtegehalt von 10-45% umfassend mindestens ein anorganisches Sekundärphosphat und mindestens ein flüssiges Reaktionsmittel, wobei eine Inkubationszeit zwischen dem anorganischem Sekundärphosphat und dem Reaktionsmittel in einem Bereich von 10 bis 500 Minuten liegt,
b) Reduzierung des Feuchtegehalts des ersten Gemischs durch Zuführung von mindestens einer festen Komponente, wodurch ein zweites Gemisch erhalten wird, das eine Rohstoffmischung mit einem Feuchteanteil von weniger als 35 % darstellt,
c) Granulierung und/oder Extrudierung der Rohstoffmischung mittels eines Pelletier- oder Granuliertellers, einer Granuliertrommel oder eines Intensivmischers
und Wiederholen der Prozessschritte a) bis c) seriell oder parallel. wodurch das Nährstoffgranulats erhalten wird.

Das erste Gemisch wird im Sinne der Erfindung vorzugsweise auch als erdfeuchtes bis plastisch leicht formbares Gemisch bezeichnet. Es ist erfindungsgemäss, dass das erste Gemisch einen höheren Feuchteanteil als das zweite Gemisch aufweist, das in Verfahrensschritt b) erzeugt wird. Es ist im Sinne der Erfindung insbesondere bevorzugt, dass das erste Gemisch in einem Bereich sowohl "erdfeucht", als auch "plastisch leicht formbar" liegen kann. Das zweite Gemisch wird im Sinne der Erfindung vorzugsweise auch als erdfeuchtes Gemisch bezeichnet, wobei das zweite Gemisch vorzugsweise eine Rohstoffmischung darstellt, die ebenfalls über eine erdfeuchte Konsistenz verfügt. Vorzugsweise unterscheiden sich die beiden Gemische hinsichtlich ihrer Konsistenz, was vorzugsweise durch die unterschiedlichen Bezeichnungen "erdfeucht bis plastisch leicht formbar" und "erdfeucht" zum Ausdruck kommt.

Es ist im Sinne der Erfindung bevorzugt, dass im Sinne der Erfindung stets eine Asche mit einem Reaktionsmittel reagiert. Es ist insbesondere bevorzugt, dass Asche und Reaktionsmittel als Gemisch zusammen reagieren. Dadurch unterschiedet sich die hier vorgeschlagene Erfindung von konventionellen Verfahren, die aus dem Stand der Technik bekannt sind. Es ist im Sinne der Erfindung bevorzugt, dass weitere Komponenten am Anfang des Herstellungsverfahrens zugegeben werden können, so dass sie bei der Reaktion dann im Gemisch vorliegen. Es kann aber auch bevorzugt sein, diese weiteren Komponenten zu einem späteren Zeitpunkt hinzuzufügen. Eine weitere Abgrenzung zum Stand der Technik wird dadurch erreicht, dass im Kontext der vorgeschlagenen Erfindung mit erdfeuchten beziehungsweise erdfeucht bis plastisch leicht formbaren Mischungen gearbeitet wird, die gerade keine Suspensionen, wie im Stand der Technik beschrieben, darstellen.

Die Formulierung, wonach "eine Inkubationszeit zwischen dem anorganischem Sekundärphosphat und dem Reaktionsmittel in einem Bereich von 10 bis 500 Minuten liegt" bedeutet im Sinne der Erfindung, dass eine solche Inkubationszeit zwischen dem anorganischem Sekundärphosphat und dem Reaktionsmittel eingehalten wird. Das bedeutet im Sinne der Erfindung bevorzugt, dass dem anorganischem Sekundärphosphat und dem Reaktionsmittel eine Zeitspanne von 10 bis 500 Minuten gegeben wird, um miteinander zu reagieren und das erste Gemisch zu bilden.

Granulate, die zur Verbesserung Nährstoffzufuhr im Bereich der Landwirtschaft, Forstwirtschaft oder Gartenbau eingesetzt werden, sind mithilfe von chemischen Formeln oder biophysikalischen Daten nur schwer zu charakterisieren. Deshalb werden die Nährstoffgranulate im Sinne der Erfindung bevorzugt durch ein Verfahren zu ihrer Herstellung gekennzeichnet. Dies ist deshalb zulässig, da die hier vorgeschlagenen Nährstoffgranulate am einfachsten anhand ihres Herstellungsverfahrens definiert werden können. Die vorgeschlagenen Granulate umfassen vorzugsweise mehrere Nährstoffquellen. Eine dieser Nährstoffquellen stellt erfindungsgemäß anorganisches Sekundärphosphat dar, wie es beispielsweise in Klärschlammaschen vorkommt. Dieses Sekundärphosphat wird durch Einwirken eines Reaktionsmittels verfügbar gemacht, wobei das Reaktionsmittel vorzugsweise in einer flüssigen Form vorliegt. Durch das vorgeschlagene Verfahren und die vorgeschlagene Vorrichtung können verschiedenste anorganische Sekundärphosphate effizient und kostengünstig aufbereitet werden, wobei die typische Schwankungsbreite der Sekundärrohstoffe durch flexibel einsetzbare weitere Nährstoffkomponenten ausgeglichen werden kann. Dabei können auch gezielt boden- und/oder pflanzenspezifische Düngerzusammensetzungen eingestellt werden, wobei im daraus resultierendem Düngergranulat ein Großteil des Phosphates in einer überraschend gut pflanzenverfügbaren Form vorliegt. Eine weitere vorteilhafte technische Wirkung der vorgeschlagenen Erfindung besteht darin, dass die Neutralammoniumcitratlöslichkeit des mit dem anorganischen Sekundärphosphat zugeführten Phosphats durch Reaktion mit dem mindestens einem flüssigen Reaktionsmittel erheblich erhöht wird. Darüber hinaus ist der P2O5-Anteil aus dem anorganischen Sekundärphosphat im Nährstoffgranulat größer 60 % neutral-ammoniumcitratlöslich bezogen auf den P2O5-Gesamtgehalt. In einer bevorzugten Ausführungsform der Erfindung umfasst das Verfahren zur Herstellung eines Nährstoffgranulats die folgenden Schritte:
a) Erzeugung eines erdfeuchten bis plastisch leicht formbaren mit einem Feuchtegehalt von 10-45% aus mindestens einem anorganischen Sekundärphosphat und mindestens einem flüssigen Reaktionsmittel, sowie Inkubationszeit zwischen anorganischem Sekundärphosphat und Reaktionsmittel zwischen 10 bis 500 Minuten,
b) Reduzierung des Feuchtegehalts des Gemischs aus a) und Einstellung einer erdfeuchten Rohstoffmischung mit einem Feuchteanteil von weniger als 35 % durch die Zuführung von mindestens einer festen Komponente zu dem Gemisch aus a) und
c) Granulierung und/oder Extrudierung der erdfeuchten Rohstoffmischung aus b) mittels eines Pelletier- oder Granuliertellers, einer Granuliertrommel oder eines Intensivmischers und Wiederholen der Prozessschritte a) bis c) seriell oder parallel,
wobei die Neutralammoniumcitratlöslichkeit des mit dem anorganischen Sekundärphosphat zugeführten Phosphats durch Reaktion mit dem mindestens einem flüssigen Reaktionsmittel erhöht wird und der P2O5-Anteil aus dem anorganischen Sekundärphosphat im Nährstoffgranulat größer 60 % neutral-ammoniumcitratlöslich ist.

Es ist im Sinne der Erfindung bevorzugt, dass bei oder im Anschluss an die Granulierung und/oder Extrudierung der Rohstoffmischung eine Trocknung erfolgt. In Verfahrensschritt b) wird eine trockene Komponente zugegeben, wodurch der Feuchtegehalt des zuvor erdfeuchten bis plastisch leicht formbaren Gemischs aus Schritt a) reduziert wird. Es ist im Sinne der Erfindung ganz besonders bevorzugt, dass die Reduzierung des Feuchtegehalts in Schritt b) durch Zugabe der trockenen Komponenten nur soweit erfolgt, dass das erhaltene zweite Gemisch, das insbesondere als erdfeucht bezeichnet wird, noch granulierfähig ist, so dass ein Grüngranulat entstehen kann. Es ist im Sinne der Erfindung ganz besonders bevorzugt, dass das erste Gemisch aus dem zweiten Gemisch hergestellt wird, wobei das zweite Gemisch eine niedrigere Feuchte hat als das erste Gemisch. Diese Reduzierung des Feuchtegehalts wird vorzugsweise durch die Zugabe der mindestens einen trockenen Komponente erreicht.

Es ist erfindungsgemäss, dass das erdfeuchte bis plastisch leicht formbare Gemisch einen Feuchtegehalt von 10 -45 % aufweist.

Es ist erfindungsgemäss, dass das erste Gemisch diesen Feuchtegehalt aufweist. Ferner ist es im Sinne der Erfindung bevorzugt, dass ein pH-Wert des Gemischs und/oder der Rohstoffmischung nach der Inkubationszeit in einem Bereich von 4-8 liegt beziehungsweise dass der pH-Wert des erdfeuchten bis plastisch leicht formbaren Gemischs und/oder der erdfeuchten Rohstoffmischung nach der Inkubationszeit im Bereich von 4-8 eingestellt wird. Durch die Einstellbarkeit des pH-Wertes ist es vorteilhafterweise möglich, besonders spezifische boden- und/oder pflanzenspezifische Düngerzusammensetzungen bereitzustellen, wobei das resultierende Düngergranulat überraschenderweise einen großen Anteil von besonders gut pflanzenverfügbarem Phosphat aufweist.

Es ist im Sinne der Erfindung bevorzugt, dass das Verfahren eine Fraktionierung des erzeugten Nährstoffgranulates umfasst, wobei eine Grobfraktion und/oder eine Feinfraktion aufgemahlen dem ersten Gemisch, dem zweiten Gemisch und/oder dem Prozessschritt c) zumindest teilweise zuführbar ist. Mit anderen Worten ist es bevorzugt, dass sich nach der Granulierung eine Fraktionierung des erzeugten Nährstoffgranulates anschließt, wobei die Grobfraktion und/oder die Feinfraktion aufgemahlen und dem Schritt a), b) und/oder c) des vorgeschlagenen Verfahrens zumindest teilweise zugeführt werden kann. Es ist im Sinne der Erfindung insbesondere bevorzugt, dass die Fraktionierung nach der Granulierung erfolgt. Es ist im Sinne der Erfindung bevorzugt, dass das aufgemahlene Material in Verfahrensschritt c) zugegeben wird, so dass es eingearbeitet werden kann oder die Grüngranulatoberfläche "pudert".

Es ist im Sinne der Erfindung bevorzugt, dass in Summe 1 bis 70 % Kristallisationsprodukte aus der Phosphorelimination dem Schritt a), b) und/oder c) des vorgeschlagenen Verfahrens zugeführt werden, wobei eine Trocknung oberhalb 100°C bezogen auf die Materialtemperatur bei der Trocknung erfolgen kann.

Ebenfalls offenbart, aber nicht gemäss der Erfindung eine Vorrichtung zur Herstellung eines Nährstoffgranulates, wobei die Vorrichtung folgende Komponenten umfasst:
a) mindestens einen ersten Mischbehälter, der dazu eingerichtet ist, dass darin zumindest ein anorganisches Sekundärphosphat und ein flüssiges Reaktionsmittel zu einem Gemisch vermischt werden, wobei für eine Inkubationszeit der erste Mischbehälter und/oder weitere Behälter genutzt werden,
b) optional einen zweiten Mischbehälter, der dazu eingerichtet ist, dass dem Gemisch zumindest eine feste Komponente zugeführt wird, wobei hierfür der erste Mischbehälter oder ein davon separater zweiter Mischbehälter verwendet werden kann,
c) mindestens eine Granulier- und/oder Extrudiereinheit, die dazu eingerichtet ist, dass das erzeugte Gemisch granuliert und/oder extrudiert wird.

Mit anderen Worten ist vorzugsweise eine Vorrichtung zur Herstellung eines Nährstoffgranulates vorgesehen, die vorzugsweise die folgenden Komponenten umfasst:
a) mindestens ein Mischbehälter, in dem mindestens das anorganische Sekundärphosphat und das Reaktionsmittel zugeführt, gemischt und daraus eine erdfeuchtes bis plastisch leicht formbares Gemische erzeugt wird, wobei für die Inkubationszeit entweder dieser Mischbehälter genutzt wird und/oder dafür weitere Behälter vorhanden sind, in die dieses Gemisch für die Inkubationszeit überführt wird und gemischt werden kann,
b) mindestens ein Mischbehälter, in dem zu dem sich dort befindlichen oder dorthin zugeführten erdfeuchten bis plastisch leicht formbaren Gemisch zumindest eine feste Komponente zugeführt, gemischt und daraus eine erdfeuchtes Gemische erzeugt wird, wobei dieser Mischbehälter dem Mischbehälter aus a) entsprechen und/oder mindestens ein davon separater Mischbehälter sein kann,
c) mindestens eine Granulier- und/oder Extrudiereinheit, in der zumindest das erzeugte erdfeuchte Gemisch granuliert und/oder extrudiert werden kann, wobei Misch- und Zuführungseinheiten zum Mischen und zur Zugabe von weiteren Komponenten in der Zuführungseinheit vorhanden sein können.

Es ist bevorzugt, dass der Mischbehälter aus a), der bevorzugt auch als "erster Mischbehälter" bezeichnet wird, und/oder der Mischbehälter aus b), der bevorzugt auch als "zweiter Mischbehälter" bezeichnet wird, auch als diese Granulier- und/oder Extrudiereinheit fungieren kann. Vorzugsweise kann der erste und/oder der zweite Mischbehälter eine separate Einheit darstellen, in die mittels mindestens einer vorhandenen Zuführeinheit das Gemisch überführt werden kann. Es ist darüber hinaus bevorzugt, dass Misch- und Zuführungseinheiten zum Mischen und zur Zugabe von weiteren Komponenten in der Zuführungseinheit vorhanden sein können. Es ist ferner bevorzugt, dass sich an die Granulier- und/oder Extrudiereinheit eine Trocknungseinheit zur Trocknung, der erzeugten Granulate und/oder Extrudate anschließt. Vorzugsweise schließt sich ferner zusätzlich eine Separiereinheit zur Fraktionierung der erzeugten Granulate und/oder Extrudate an, wobei sich daran eine Mahleinheit zur Aufmahlung der abgetrennten Grob- und/oder Feinfraktion, sowie eine Rückführeinheit dieser aufgemahlenen oder nicht aufgemahlenen abgetrennten Grob- und/oder Feinfraktion in mindestens einen Mischbehälter und/oder einer Granulier- und/oder Extrudiereinheit anschließen können.

Erfindungsgemäss ist die Granulier- und/oder Extrudiereinheit ein Pelletier- oder Granuliertellern, eine Granuliertrommel, ein Extruder oder ein Intensivmischer.

In einem weiteren Aspekt betrifft die Erfindung ein Nährstoffgranulat, das mit dem vorgeschlagenen Verfahren herstellbar ist, wobei das Nährstoffgranulat mindestens ein anorganisches Sekundärphosphat umfasst, wobei eine Neutralammoniumcitratlöslichkeit eines mit dem anorganischen Sekundärphosphat zugeführten Phosphats im Nährstoffgranulat größer 60 % neutral-ammoniumcitratlöslich und weniger als 40% wasserlöslich ist. Mit anderen Worten ist es bevorzugt, dass das vorgeschlagene Nährstoffgranulat mit dem vorgeschlagenen Verfahren hergestellt werden kann.

Erfindungsgemäss weist ein Phosphatanteil aus dem anorganischen Sekundärphosphat eine Wasserlöslichkeit von kleiner 40 % auf. Es ist im Sinne der Erfindung darüber hinaus bevorzugt, dass das Nährstoffgranulat 0,1 bis 25 % Huminsäure, Fulvosäure, deren Salze (Humate, Fulvate) und/oder 0,1 bis 30 % organische Säure und/oder 0,1 bis 50 % Strukturstoffe umfasst. Ferner kann in dem vorgeschlagenen Nährstoffgranulat mindestens ein Kristallisationsprodukt aus der Phosphorelimination in einem Konzentrationsbereich zwischen 1 und 70 % enthalten enthalten sein.

In einem weiteren Aspekt betrifft die Erfindung die Verwendung des vorgeschlagenen Nährstoffgranulats in der Landwirtschaft, Forstwirtschaft und/oder im Gartenbau, wobei das Nährstoffgranulat mindestens ein anorganisches Sekundärphosphat umfasst, sowie einen größer 60 % neutral-ammoniumcitratlöslichen P2O5-Anteil zur Nährstoffzufuhr.

Das erfindungsgemäße Verfahren unterscheidet sich gegenüber dem Stand der Technik in folgenden Punkten und löst deshalb die Aufgabe, die der Erfindung zugrunde liegt:
Im Schritt a) erfolgt zunächst die Reaktion zwischen mindestens einem anorganischen Sekundärphosphat und mindestens einem flüssigen Reaktionsmittel kontrolliert und zeitlich weitgehend getrennt von der Granulation durch Einhalten einer bestimmten Inkubationszeit.

Zudem wird im Prozessschritt a) zunächst ein Gemisch erzeugt, welches einen höheren Feuchtegehalt als für die Granulation erforderlich aufweist. Erst durch die nachfolgende, zeitlich von der Reaktion zwischen anorganischem Sekundärphosphat und Säure weitgehend getrennte Zugabe mindestens einer festen Komponente in Prozessschritt b) wird der Feuchtegehalt des dann resultierenden Gemisches reduziert und damit an die Granulationserfordernisse angepasst. Dadurch weist das Gemisch zunächst für die Säurereaktion einen höheren Feuchtegehalt auf als bei konventionellen Verfahren, die aus dem Stand der Technik bekannt sein, bei denen die phosphathaltige Asche zusammen mit Nährstoffkomponenten (z.B. Alkalisalzen) mit der Säure gemeinsam vermischt wird und in diesem Gemisch die Säurereaktion im Grunde gleichzeitig ohne Einhalten einer Inkubationszeit mit der Granulation stattfindet.

Eine höhere Feuchte verbessert dabei die Reaktionsführung und erhöht die Reaktionsgeschwindigkeit und führt zu einer kontrollierbaren Prozessführung und zum Erhalt von homogeneren Produkten. Durch die zeitliche Trennung der Reaktion von der Granulation wird das technische Problem gelöst, dass die exotherme und zum Teil spontan und sehr heftig ablaufende Reaktion zwischen Asche und Reaktionsmittel den Granulationsprozess behindert.

Im Schritt a) wird insbesondere keine Suspension, sondern ein erdfeuchtes bis plastisch leicht formbares Gemisch aus mindestens Asche, Reaktionsmittel und gegebenenfalls weiterer Flüssigkeit mit wesentlich weniger flüssiger Phase in Summe als bei einer Suspension erzeugt. Durch die Zugabe der wesentlich geringeren Menge an flüssige Phase gegenüber einer Suspension muss zur Bildung der Grüngranulate keine flüssige Phase thermisch oder mechanisch zuvor abgetrennt werden. Vielmehr wird eine direkt granulierfähige, erdfeuchte Rohstoffmischung durch Zugabe fester Komponenten mit geringer Feuchte im Prozessschritt b) erzeugt. Der durchschnittliche Fachmann weiß, dass Grüngranulat mindestens alle Komponenten des Düngegranulats enthält, dass es jedoch einen zu hohen Flüssigphasenanteil (z.B. Feuchte) aufweist, der noch durch finale Trocknung entfernt werden muss.

Die thermische Abtrennung der flüssigen Phase einer Rohstoffsuspension durch Trocknung, wie aus dem Stand der Technik bekannt, ist extrem energieaufwendig und damit teuer und entfällt vorteilhafterweise im Kontext der vorliegenden Erfindung.

Durch das Einstellen der erfindungsgemäßen erdfeuchten Mischung im Prozessschritt b) können zur Granulation zu Grüngranulaten einfache Granulationstechnologien wie beispielsweise (Intensiv)-Mischer oder Granulierteller verwendet werden. Zur Granulation von Suspensionen können diese Technologien nachteiligerweise nicht verwendet werden. Hier müssen aufwendigere und teurere Technologien wie beispielsweise Sprühgranulation, -agglomeration oder -trocknung verwendet werden.

Es war völlig überraschend, dass das mit dem erfindungsgemäßen Verfahren erzeugte Nährstoffgranulat sowohl die Nährstoffversorgung und hier insbesondere die Phosphorversorgung von Pflanzen sicherstellt, als auch die Entwicklung von Kleinstlebewesen, wie auch von Bakterien und Protozoen so optimiert, dass die Pflanzen besser wachsen können. Es lag für den Fachmann keinesfalls nahe, dass pedosphärenverbessernde Nährstoffgranulate, die durch die vorgeschlagenen Schritte der Herstellung charakterisiert werden, geeignet sind, sowohl die tierische Lebendmasse der Böden zu optimieren, als auch das Pflanzenwachstum zu verbessern. Dies betrifft vor allem die Nutzpflanzen Mais, Weizen, Zwiebeln, Kartoffeln, Hirse, Bohnen, Äpfel, Zuckerrüben, Gurken und Gewürzgurken, Weintrauben, Tomaten, Gerste und Kohl.

Es ist erfindungsgemäss, dass sich die im Kontext dieser Erfindung genannten Prozentangaben (%) auf Gewichtsprozent (Gew.-% d. h. % w/w) beziehen, wenn nicht anders angegeben.

Die Gesamtmenge an Phosphor (P), sowie die Schwermetalle wie beispielsweise Blei, Cadmium, Nickel, werden mittels induktiv-gekoppelter Plasma-Atom-Emissionsspektrometrie (ICP-OES) gemäß DIN EN ISO 11885:2009 bestimmt. Dazu wird die zu bestimmende Probe zunächst mit einem Königswasseraufschluss gemäß DIN EN 13346:2001-04 aufgeschlossen. Zur Bestimmung des löslichen Phosphatanteils sind unterschiedliche Verfahren, insbesondere unterschiedliche Extraktionsverfahren bekannt. Zur Abschätzung der P-Verfügbarkeit werden dazu die Düngemittel im Labor mit unterschiedlichen Lösungsmitteln untersucht und entsprechend gekennzeichnet. Die wichtigsten eingesetzten Lösungsmittel sind Wasser, Ammoncitrat, Zitronensäure, Ameisensäure und Mineralsäuren. Auch in der EU-Verordnung über Düngemittel sind verschiedene Verfahren zur Bestimmung der Phosphatlöslichkeit von Düngemitteln normiert. Je nach Herkunft und Beschaffenheit des zu prüfenden P-Düngers kann ein unterschiedliches Verfahren zum Einsatz kommen. Zur Charakterisierung der Löslichkeit des Phosphates wird sich hier auf die drei folgenden Extraktionsverfahren beschränk: Die Extraktion des in Wasser löslichen Phosphors (P) erfolgt gemäß DIN EN15958:2011. Die Extraktion des in neutralem Ammoniumcitrat löslichen Phosphors (P) erfolgt gemäß DIN EN15957:2011. Die Extraktion des 2%iger Citronensäure löslichen Phosphors (P) erfolgt gemäß DIN EN15920:2011. Der Phosphatgehalt (P) wird anschließend mittels induktiv-gekoppelter Plasma-Atom-Emissionsspektrometrie (ICP-OES) gemäß DIN EN ISO 11885:2009 bestimmt.

Nur bei hohen Anteilen von wasser- und ammoncitratlöslichem Phosphat ist gewährleistet, dass ein großer Teil des Düngerphosphats tatsächlich kurz- und mittelfristig der Pflanze zur Verfügung steht. Der neutral-ammoncitratlösliche Phosphoranteil kann dabei vorzugsweise als Anhaltspunkt für die mittelfristige Pflanzenverfügbarkeit des Düngephosphors herangezogen werden, beispielsweise über den Zeitraum von etwa einer Fruchtfolge. Der unmittelbar verfügbare P-Anteil eines Düngemittels wird bevorzugt durch seine Löslichkeit in Wasser beschrieben. Je höher der wasserlösliche P-Anteil, desto schneller bzw. leichter die Verfügbarkeit des Dünge-P für die Pflanze. Mit stärkeren Lösungsmitteln, wie Zitronen- oder Ameisensäure, werden auch P-Anteile gelöst, die allenfalls langfristig oder nur unter bestimmten Standortbedingungen, wie tiefen pH-Werten, pflanzenverfügbar sind. Pflanz- und Vegetationsversuche haben gezeigt, dass vor allem eine gute Korrelation zwischen neutral-ammoncitratlöslichem Phosphatanteil und dem Wachstum der Pflanzen besteht.

Nach heute übereinstimmender wissenschaftlicher Meinung sollte aus Gründen des Ressourcenschutzes die Verwendung von P-Düngemitteln bevorzugt werden, die einen besonders hohen neutralammoncitratlöslichen Phosphatanteil aufweisen. Es stellt ein besonderes Verdienst der Erfindung dar, dass das verhältnismäßig schlecht lösliche Phosphat aus den Sekundärphosphat zu einem überraschend hohen Anteil neutral-ammoniumcitratlöslich umgewandelt und so Düngergranulate mit einem besonders hohen neutral-ammoniumcitratlöslichen P2O5-Anteil von größer 60 %, besser größer 70 %, optimal größer 80 % am gesamten P2O5-Anteil im Düngergranulat bereitgestellt werden kann. Zudem wird das vorgeschlagene Verfahren zudem so gesteuert, dass neben der beschriebenen Neutral-Ammoniumcitratlöslichkeit eine möglichst geringe Wasserlöslichkeit von kleiner 40 %, bevorzugt kleiner als 30 %, besonders bevorzugt kleiner 20 % am gesamten P2O5-Anteil im Düngergranulat resultiert.

Düngemittel oder auch Nährstoffsubstrat sind im Sinne der Erfindung als Stoffe oder Stoffgemische zu verstehen, die das Nährstoffangebot für die angebauten Pflanzen, insbesondere Kulturpflanzen, in der Land- und Forstwirtschaft sowie im Gartenbau ergänzen beziehungsweise einstellen und sie sind gegebenenfalls mit weiteren Materialien kombinierbar und/oder funktionalisierbar. Als Düngemittel werden hier sowohl Einzelnährstoffdünger (wie Phosphatdünger), als auch Mehrnährstoffdünger verstanden. Düngemittel in Granulatform, die vorzugsweise auch Nährstoffgranulat genannt werden, ist ein Haufwerk typischerweise in annähernd sphärischer Form und ausreichender Eigenfestigkeit mit einer mittleren Granulatgröße von 0,5- 10 mm, bevorzugt 1-7 mm, ganz besonders bevorzugt 2-5 mm.

Als anorganisches Sekundärphosphat werden vorzugsweise solche Stoffe bezeichnet, die bei der Aufbereitung, Zubereitung und/oder Herstellung von Erzeugnissen entstehen (Überrest) und einen Phosphoranteil von größer 5 % P2O5 und einen TOC-Anteil von kleiner 3 % aufweisen, wobei die Abkürzung TOC im Sinne der Erfindung bevorzugt für *total organic carbon* steht. Beispiele für anorganische Sekundärphosphate sind Aschen und/oder Schlacken aus der Mono- oder Mitverbrennung von Klärschlamm, Aschen und/oder Schlacken aus der Verbrennung beziehungsweise Mitverbrennung von Tierausscheidungen, Tiermehl, Tierreste und Tierkörper oder Aschen und/oder Schlacken aus der Verbrennung von Gülle und Gärresten als Einzelstoff beziehungsweise Gemische daraus. Die im anorganischen Sekundärphosphat enthaltenen Phosphorverbindungen werden im Sinne der vorliegenden Erfindung als Phosphat bezeichnet. Es ist im Sinne der Erfindung bevorzugt, dass die Bezeichnung "Phosphat" sowohl die im anorganischen Sekundärphosphat enthaltenen Phosphorverbindungen einschließt, als auch andersartige P-Verbindungen. Unter einem flüssigen Reaktionsmittel ist hier ein Stoff oder ein Gemisch in flüssiger Form zu verstehen, der in der Mischung im Prozessschritt a) zumindest einen Teil des durch das anorganische Sekundärphosphat zugeführten Phosphates löst und/oder mit diesen reagiert. Reaktionsmittel sind im Sinne der Erfindung organische oder anorganische Säuren oder Säuregemische oder Laugen oder Gemische aus unterschiedlichen Laugen, jeweils in unverdünnter oder verdünnter Form. Reaktionsmittel sind vorzugsweise auch Gemische, die einen pH-Wert kleiner 3 oder größer 11 aufweisen und/oder zumindest einen Teil des durch das anorganische Sekundärphosphat zugeführten Phosphates lösen und/oder mit diesen reagieren können, so beispielsweise Gemische, die zumindest anteilig Säure oder Laugen neben anderen Komponenten enthalten oder basische beziehungsweise saure Prozess(ab)wässer. Unter flüssigen Reaktionsmittel sind bevorzugt auch diejenigen Stoffe zu verstehen, die sich erst im Prozessschritt a) als flüssige Phase bilden, beispielsweise durch Auflösen von Feststoffen, die dann entsprechend zumindest Teile des durch das anorganische Sekundärphosphat zugeführten Phosphates lösen und/oder mit diesen reagieren. Beispiele dafür sind Säuren (z.B Citronensäure) oder Hydroxide (z.B. NaOH, KOH), die als Feststoff zugegeben werden können und beispielsweise durch Wasser im Prozessschritt a) gelöst werden und als so gebildetes flüssiges Reaktionsmittel das Phosphat zumindest anteilig lösen und/oder mit diesem reagieren.

Der Begriff "erdfeucht" wird im Sinne der Erfindung vorzugsweise mit Hilfe einer Konsistenz definiert. In der Betontechnologie wird allgemein ein Beton steifer Konsistenz mit einem Wasserzementwert ≤ 0,40 als erdfeuchter Beton bezeichnet. In Analogie zu dieser Definition ist unter einer erdfeuchten Rohstoffmischung im Sinne der Erfindung ein Konsistenzbereich der Rohstoffmischung vergleichbar mit einer Konsistenz wie erdfeuchter Beton zu verstehen. Auf der einen Seite ist der erfindungsgemäße Konsistenzbereich durch eine verhältnismäßig trockene Mischung jedoch mit mehr als 5 % Feuchte, bezogen auf die Rohstoffmischung, begrenzt, die sich gerade nicht in der Hand formen lässt, also noch nicht wie Pulver zerfällt. Auf der anderen Seite ist der Bereich begrenzt dadurch, dass sich die Rohstoffmischung in der Hand formen lässt, vergleichbar mit einem Schneeball, und nicht ohne Krafteinwirkung, beispielsweise durch Vibration, zerfließt.

Unter einem plastisch leicht formbaren Gemisch ist im Sinne der Erfindung vorzugsweise ein Gemisch mit einer knetmassenähnlichen Konsistenz zu verstehen, wobei das plastisch leicht formbare Gemisch bereits selbst eine Formstabilität durch wirksame Bindekräfte aufweist, wobei diese Formstabilität durch leichte mechanische Kräfte (wie Scher-, Druck- oder Zugkräfte) verformbar ist und nach der Krafteinwirkung erneut eine Formstabilität aufweist. Ein plastisch leicht formbares Gemisch weist bevorzugt einen etwas höheren Feuchteanteil als erdfeuchte Mischungen auf.

Eine erdfeuchte Mischung und ein plastisch leicht formbares Gemisch grenzen sich im Sinne der Erfindung klar von einer Suspension ab. Bei einer Suspension handelt es sich definitionsgemäß um ein heterogenes Stoffgemisch aus einer Flüssigkeit und darin fein verteilten Festkörpern (Partikeln), wobei sich die Partikel in der Flüssigkeit zumindest teilweise und zumindest zeitweise in der Schwebe halten, auch wenn ein Absetzverhalten einsetzen kann. Die Feststoffe sind in der flüssigen Phase "suspendiert". Die in der erdfeuchten und/oder plastisch leicht formbaren Mischung als Feuchte bezeichnete Flüssigkeit im Kontext der vorliegenden Erfindung ist hingegen physikalisch an den Feststoff gebunden beziehungsweise anhaftend oder liegt weitegehend als sogenanntes Porenwasser vor. Erdfeuchte und/oder plastisch leicht formbare Mischungen haben einen wesentlich geringeren Anteil an flüssiger Phase als Suspensionen.

Die Feuchte beziehungsweise der Feuchtegehalt wird im Kontext der vorliegenden Erfindung gravimetrischen nach DIN 52183 bestimmt. Bei der auch als Darr-Methode bekannten gravimetrischen Feuchtigkeitsbestimmung wird die Probe zuerst gewogen und anschließend bei 105°C in einem Trockenofen bis zur Gewichtskonstanz getrocknet. Dabei entweicht das in der Probe enthaltene freie Wasser. Die Gewichtsdifferenz wird festgestellt, welche hier definitionsgemäß der Feuchte beziehungsweise dem Feuchtegehalt entspricht.

Im Prozessschritt a) des vorgeschlagenen Verfahrens wird vorzugsweise ein erdfeuchtes bis plastisch leicht formbares Gemisch aus mindestens einem anorganischen Sekundärphosphat und mindestens einem flüssigen Reaktionsmittel erzeugt. Es ist vorteilhafterweise möglich, auch weitere Komponenten des herzustellenden Nährstoffgranulats bereits in diesem Verfahrensschritt zu integrieren. Die Inkubationszeit zwischen anorganischem Sekundärphosphat und Reaktionsmittel beträgt dabei zwischen 1 bis 500 Minuten.

Zur Bildung des erdfeuchten bis plastisch leicht formbaren Gemischs werden mindestens ein anorganischen Sekundärphosphat und mindestens ein flüssiges Reaktionsmittel zusammengeführt und ausreichend homogenisiert. Insbesondere wird dadurch das erste Gemisch im Sinne der Erfindung erhalten. Zur Einstellung der vorgesehenen erdfeuchten bis plastisch leicht formbaren Konsistenz des erstem Gemischs können eine oder mehrere weitere flüssige Komponenten, so beispielsweise Wasser, neben dem Reaktionsmittel zugegeben werden.

Im erfindungsgemäßen Verfahren reagiert das oder die anorganischen Sekundärphosphate mit mindestens einem flüssigen Reaktionsmittel. Dabei wird die Löslichkeit des im anorganischen Sekundärphosphat enthaltenen Phosphats erhöht. Der im anorganische Sekundärphosphate vorhandene Phosphatanteil weist typischerweise eine verhältnismäßig geringe Löslichkeit beziehungsweise Pflanzenverfügbarkeit auf. Entsprechend sind solche Stoffe, wie beispielsweise Klärschlammaschen, nur bedingt als Düngemittel geeignet. Typischerweise zeigen diese anorganischen Sekundärphosphate eine Wasserlöslichkeit von kleiner 30 %, zumeist sogar kleiner 10 % und eine Neutralammoniumcitratlöslichkeit von kleiner 50% jeweils bezogen auf den Gesamtphosphatgehalt im anorganischen Sekundärphosphat auf. Für einen sinnvollen Einsatz als Düngemittel muss dieses unzureichend lösliche Phosphat in ein besser lösliches und damit besser pflanzenverfügbares Phosphat umgewandelt werden. Die Umwandlung erfolgt erfindungsgemäß durch zumindest eine teilweise Reaktion des anorganischen Sekundärphosphats mit mindestens einem flüssigen Reaktionsmittel. Das Reaktionsmittel soll zumindest einen Teil des im anorganischen Sekundärphosphat enthaltenen Phosphates lösen und/oder mit diesem so reagieren oder das Phosphat durch Reaktion umwandeln, dass ein besser neutral-ammoniumcitratlösliches Phosphat entsteht. Das gegebenenfalls durch das flüssige Reaktionsmittel gelöste Phosphat bildet im anschließenden Prozess, zum Beispiel durch Fällung, Umkristallisation, oder bei der Trocknung, ebenfalls ein besser neutral-ammoniumcitratlösliches Phosphat als im anorganischen Sekundärphosphat. Besser neutral-ammoniumcitratlöslich bedeutet im Sinne der Erfindung bevorzugt, dass die Neutralammoniumcitratlöslichkeit des Phosphates aus dem anorganischen Sekundärphosphat nach der Reaktion mit dem Reaktionsmittel höher ist als zuvor. Bevorzugt ist dabei eine Erhöhung der Neutralammoniumcitratlöslichkeit um größer 20 %. Dies soll in einem Berechnungsbeispiel gezeigt werden: die Neutralammoniumcitratlöslichkeit des Phosphatanteils aus dem unbehandeltem Sekundärphosphat von 50 % wird durch die Reaktion mit dem Reaktionsmittel auf größer 60% erhöht, besonders bevorzugt ist eine Erhöhung um größer 50 %. Bei Einsatz von Säuren unterscheidet sich das vorgeschlagene Verfahren dadurch vom Stand der Technik, dass das Phosphat zumindest teilweise reagiert, wodurch vorteilhafterweise seine Löslichkeit erhöht wird.

Die Erhöhung der Löslichkeit ist hingegen konkretisiert, z.B. über den Neutral-Ammoniumcitratlöslichkeit in nachfolgender Beschreibung.

Durch die Auswahl des Reaktionsmittels, beispielsweise in Bezug auf seine Art und seine Konzentration, die Reaktionsführung und die Reaktionszeit kann vorteilhafterweise Einfluss auf die resultierende Neutralammoniumcitratlöslichkeit des anorganischen Sekundärphosphates genommen werden. Bevorzugt weißt der Phosphatanteil aus dem anorganischen Sekundärphosphat anschließend im erzeugten Düngergranulat eine Neutralammoniumcitratlöslichkeit von größer 60 %, bevorzugt größer 70 %, besonders bevorzugt größer 80 % auf. Durch diese Reaktion beziehungsweise Umwandlung des Phosphates und dieser resultierenden Neutralammoniumcitratlslichkeit aus dem anorganischen Sekundärphosphat werden eine bessere Phosphat-Pflanzenverfügbarkeit und damit eine sehr gute Düngewirkung erzielt.

Um zunächst im Prozessschritt a) die Reaktion zwischen anorganischem Sekundärphosphat und Reaktionsmittel gezielt ablaufen zu lassen, wird in einer bevorzugten Ausführungsform im Prozessschritt a) ein erdfeuchtes bis plastisch leicht formbares Gemisch aus einem oder mehreren anorganischen Sekundärphosphat und einem oder mehreren flüssigen Reaktionsmittel gegebenenfalls mit Wasser erzeugt. Aus anorganischem Sekundärphosphat, Reaktionsmittel und gegebenenfalls Wasser beinhaltet diese Mischung vorzugsweise keine weiteren Komponenten. In dieser bevorzugten Ausführungsform der Erfindung werden eventuell weiterhin benötigte Komponenten, wie beispielsweise zusätzliche Nährstoffe, erst nach der erfindungsgemäßen Inkubationszeit zugegeben.

Primäres Ziel der Reaktion zwischen anorganischem Sekundärphosphat und Reaktionsmittel ist die Erhöhung der Löslichkeit. Wie oben dargestellt, wird die Löslichkeit von Phosphat bei Düngemitteln mittels unterschiedlicher Methoden ermittelt. Festzustellen gilt es dabei, dass es keinen allgemeingültigen Zusammenhang zwischen den so ermittelten Löslichkeiten in unterschiedlichen Lösungsmitteln gibt. Erhöht sich die Neutralammoniumcitratlöslichkeit beispielsweise um 50 % muss sich nicht adäquat die Wasserlöslichkeit erhöhen. Die P-Löslichkeit ist letztlich dominiert durch die Art der P-Bindung und das Lösungsmilieu. Durch die Art der Reaktionsführung in diesem Prozessschritt a) (zum Beispiel Art und Konzentration des Reaktionsmittels, Reaktionszeit, Prozesstemperatur) kann auf die Bindung des P, also auf die sich ausbildenden Phosphatphasen, Einfluss genommen werden.

Erfindungsgemäss wird die Reaktionsführung vorzugsweise so gesteuert, dass der Phosphatanteil aus dem anorganischen Sekundärphosphat anschließend im erzeugten Düngergranulat eine Neutralammoniumcitratlöslichkeit von größer 60 % und eine Wasserlöslichkeit von kleiner 40 %, aufweist. Durch die Einstellung der Löslichkeiten in dieser Form wird vorzugsweise bewirkt, dass das Phosphat über etwa eine Wachstumsperiode tatsächlich auf dem Feld für die Pflanzen ausreichend gut pflanzenverfügbar ist, jedoch in dieser Zeit nicht ausgewaschen wird. Eine Auswaschung erfolgt typischerweise, wenn eine sehr gute Wasserlöslichkeit, also deutlich höher also hier vorgesehen, vorhanden ist. In einer besonders bevorzugten Ausführungsform wird für den Phosphatanteil aus dem anorganischen Sekundärphosphat im erzeugten Düngergranulat eine Neutralammoniumcitratlöslichkeit von größer 80 % und eine Wasserlöslichkeit von kleiner 30 % eingestellt. Überraschenderweise hat sich gezeigt, dass dadurch insbesondere Winterroggen eine besonders günstige P-Versorgung über eine Wachstumsperiode erfährt. In einer anderen besonders bevorzugten Ausführungsform der Erfindung wird für den Phosphatanteil aus dem anorganischen Sekundärphosphat im erzeugten Düngergranulat eine Neutralammoniumcitratlöslichkeit von größer 90 % und eine Wasserlöslichkeit von kleiner 15 % eingestellt. Dieses Verhältnis ist besonders günstig für Weizenpflanzen. Im Stand der Technik wird häufig eine hohe Wasserlöslichkeit angestrebt. Untersuchungen, beispielsweise am Struvit, zeigen jedoch, dass auch bei nahe 0 % Wasserlöslichkeit und größer 80 % Neutralammoniumcitratlöslichkeit Düngewirkungen gleich dem Trippelsuperphosphat erzielt werden können. Insofern wendet sich die vorliegende Erfindung gerade vom Stand der Technik ab, indem mit der Erfindung die genannten Neutralammoniumcitrat- und Wasserlöslichkeiten erreicht werden.

Das im anorganischen Sekundärphosphat enthaltene Phosphat dient im erzeugten Düngemittel als Nährstoffkomponente. Hohe Phosphatgehalte, insbesondere beim anorganischen Sekundärphosphat, sind hier entsprechend vorteilhaft. Bevorzugt im Sinne der Erfindung werden deshalb anorganische Sekundärphosphate mit größer 10 % P2O5, besonders bevorzugt mit größer 15 % P2O5 und ganz besonders bevorzugt mit größer 20 % P2O5. Daneben kann das anorganische Sekundärphosphat weitere Komponenten enthalten. Vorteilhaft ist, wenn weitere Nährstoffkomponenten enthalten sind, so beispielsweise **N,** K, Mg oder andere Spurennährstoffe.

In einer bevorzugten Ausführungsform der Erfindung wird mindestens ein flüssiges Reaktionsmittel verwendet, welches mindestens eines der Elementen Stickstoff (N), Schwefel (S), Kalium (K) und/oder Phosphor (P) enthält, so beispielsweise phosphorige Säure (H3PO3), Phosphorsäure (H3PO4), Salpetersäure (HNO3), Schwefelsäure (H2SO4), schweflige Säure (H2SO3), Kalilauge (KOH). Durch die Verwendung derartige Reaktionsmittel werden entsprechend zusätzlich Nährstoffkomponenten (Stickstoff, Schwefel, Kalium und/oder Phosphor) in das Granulat eingetragen. Durch eine geeignete Reaktionsabfolge kann gegebenenfalls die Nährstoff-Bindungsform der im Reaktionsmittel enthaltenen Nährstoffe, z.B. Stickstoffs und/oder Schwefels, in eine für das Düngemittel geeignete Form umgewandelt werden.

In einer besonders bevorzugten Ausführungsform ist das Reaktionsmittel zumindest eine verdünnte oder unverdünnte Phosphorsäure und/oder phosphoriger Säure oder zumindest ein verdünntes oder unverdünntes Säuregemisch mit anteilig enthaltener Phosphorsäure und/oder phosphoriger Säure. Vorteil dabei ist, dass der Phosphoranteil in der Rohstoffdispersion und damit in den daraus letztlich erzeugten Dünger durch das Reaktionsmittel erhöht wird. Damit liefert das Reaktionsmittel nicht nur einen werthaltigen Nährstoffanteil, sondern begünstigt insbesondere die Herstellung von Phosphatdüngern. So können beispielsweise bevorzugt Nährstoffgranulat mit einem Gesamt-P2O5-Gehalt von größer 35 %, besonders bevorzugt größer 40 % und einem neutral-ammoniumcitratlöslichen Phosphatanteil davon von größer 80 %, besonders bevorzugt von größer 90 % erzeugt werden.

Das Zusammenführen der Komponenten zur Bildung des Gemischs kann in beliebiger Reihenfolge und auf für den Fachmann bekannte Art und Weise erfolgen. Wichtig ist jedoch im Prozessschritt a), dass das Reaktionsmittel in ausreichender Weise mit zumindest einem Teil des durch das anorganische Sekundärphosphat zugeführten Phosphates reagiert. Der Begriff "in ausreichender Weise reagieren" wird dabei bevorzugt durch die gewünschte Verbesserung der Neutralammoniumcitratlöslichkeit dieses Phosphates definiert. Entsprechend ist im Prozessschritt a) eine Inkubationzeit im Sinne des Einwirkenlassens des Reaktionsmittels auf das anorganische Sekundärphosphat vorgesehen. Die Inkubation gemäß Prozessschritt a) erfolgt über einen Zeitraum im Bereich von 10 bis 500 Minuten.

Durch die Einstellung der Inkubationszeit kann aktiv Einfluss auf die Art und Intensität der Löslichkeit genommen werden. Überraschenderweise wurde festgestellt, dass zur Erhöhung der Ammoniumcitratlöslichkeit eine verhältnismäßig kurze Verweilzeit ausreichend ist. In einer bevorzugten Ausführungsform der Erfindung wird deshalb die Inkubationszeit zwischen 15 und 90 Minuten eingestellt, um insbesondere die Ammoniumcitratlöslichkeit zu erhöhen. In einer besonders bevorzugten Ausführungsform der Erfindung wird die Inkubationszeit auf 15 bis 45 Minuten eingestellt. Hier können ebenfalls hohe Amonniumcitratlöslichkeiten erreicht werden, durch die geringere Inkubationszeit kann jedoch die Dimensionierung der Reaktionsbehälter verkleinert werden, was entsprechend Prozesskosten senkt.

Zur Erhöhung der Wasserlöslichkeit sind überraschenderweise längere Reaktionszeiten erforderlich. Deshalb wird in einer anderen bevorzugten Ausführungsform der Erfindung die Inkubationszeit zwischen 90 bis 500 Minuten eingestellt. In einer besonders bevorzugten Ausführungsform der Erfindung liegt die Inkubationszeit im Bereich 90 bis 200, woraus eine hohe Ammoniumcitratlöslichkeit und eine moderate Wasserlöslichkeit resultieren.

Die notwendige Inkubationszeit zur Erzielung der gewünschten Löslichkeiten hängt auch beispielsweise von der Art des eingesetzten Reaktionsmittels ab. So führen starke Säuren (wie beispielsweise konzentrierte Mineralsäuren) oder starke Basen (z.B. konzentriertes NaOH) typischerweise zu einer beschleunigten Reaktion und eine kürzere Inkubationszeit ist erforderlich. Werden hingegen schwächere Säuren, wie beispielsweise organische Säuren (wie beispielsweise Zitronen- oder Oxalsäure), eingesetzt, ist eine längere Inkubationszeit bevorzugt. In einer bevorzugten Ausführungsform der Erfindung wird die Inkubationszeit im Bereich zwischen 30 und 120 Minuten eingestellt.

Durch die Reihenfolge des Zusammenführens der Komponenten, der zeitlichen Abfolge und der Inkubationszeit kann somit vorteilhafterweise Einfluss auf die ablaufende Reaktion und somit auch die Neutralammoniumcitratlöslichkeit des Phosphates im erzeugten Düngergranulat genommen werden.

Eine höhere Prozesstemperatur erhöht vorteilhafterweise die Reaktionsgeschwindigkeit zwischen anorganischem Sekundärphosphat und dem Reaktionsmittel und verkürzt damit die notwendige Inkubationszeit. In einer besonders bevorzugten Ausführungsform der Erfindung wird die exotherme Reaktionsenergie der Reaktion im erdfeuchten bis plastisch leicht formbaren Gemisch zur Einstellung einer Temperatur des Gemischs oberhalb 30 °C, besonders bevorzugt oberhalb 40 °C und ganz besonders bevorzugt oberhalb 50 °C und damit zur Erhöhung der Reaktionsgeschwindigkeit genutzt.

Die erfindungsgemäße Trennung der Reaktion zur zumindest anteiligen Phosphatumwandlung aus dem anorganischen Sekundärphosphat von der Granulation löst vorteilhafterweise das technische Problem, dass die exotherme, zum Teil spontan und heftig ablaufende Reaktion den Granulationsprozess stark behindert. Die erfindungsgemäße Trennung der Reaktion von der Granulation ist dabei vorzugsweise im technischen Sinne zu verstehen. Das bedeutet im Sinne der Erfindung bevorzugt, dass im Prozessschritt a) der weitaus größte Anteil der Reaktion erfolgt, jedoch kann die Reaktion auch im Prozessschritt b) und c) fortlaufen, dann jedoch in deutlich verminderter Intensität. Durch das Einhalten der erfindungsgemäßen Inkubationszeit ist die dann noch vorhandene Intensität des möglichen Fortlaufens der Reaktion nicht mehr für den Granulationsprozess hinderlich. In einer bevorzugten Ausführungsform der Erfindung wird deshalb der Prozessschritt a) so gesteuert, dass mehr als 80 % der über das gesamte Verfahren erreichten Neutralammoniumcitratlöslichkeiterhöhung des anorganischen Sekundärphosphats in diesem Prozessschritt a) erreicht werden. Das heißt, würde man die Reaktion nach dem Prozessschritt a) durch schnelle Trocknung abstoppen, zeigt das mit dem Reaktionsmittel behandelte Phosphat aus dem anorganischen Sekundärphosphat dieses so abgestoppten Reaktionsprodukt bereits mindestens 80 % der Neutralammoniumcitratlöslichkeit eines Reaktionsproduktes, welches nicht abgestoppt wird, sondern Prozessschritt b) und c) noch durchläuft.

Auch können durch den weitgehenden Ablauf der Reaktion im Prozessschritt a) die aus dem Stand der Technik bekannten Korrosionsprobleme gelöst beziehungsweise zumindest stark reduziert werden. Die Reaktion im Verfahrensschritt a) kann in einem säurefestem Behälter mit säurefestem Rührwerk oder säurefesten Beschichtungen dieser Behälter und Rührwerke erfolgen, wobei nach dieser Reaktion der größte Teil der freien Säure oder Lauge aufgebraucht und damit weniger schädlich für die nachfolgenden Anlagenteile ist. Grundsätzlich können aber auch alle oder Teile der nachfolgenden Anlagenteile aus säurefesten und/oder korrosionsbeständigen Materialien gefertigt und/oder mit Säure- und/oder Korrosionsschutzschichten versehen sein. Zudem kann das erzeugte erdfeuchte bis plastisch leicht formbare Gemisch nach weitgehendem Ablauf der gewünschten Reaktion auch bei Bedarf durch die Zugabe mindestens eines Neutralisationsmittels weiter neutralisiert werden. Bevorzugt wird deshalb die Einstellung eines pH-Wertes des erdfeuchten bis plastisch leicht formbaren Gemisch nach der Inkubationszeit von 2 bis 10, besonders bevorzugt von 3 bis 9, ganz besonders bevorzugt 4 bis 8.

Das vorgeschlagene erdfeuchte bis plastisch leicht formbare Gemisch, das im Sinne der Erfindung als erstes Gemisch bezeichnet wird, enthält einen Feuchtegehalt von 10 bis 45 %, wobei dabei das Gemisch insbesondere keine Suspension ist. Gemenge mit diesem Feuchtegehalt sind in diesem Stoffsystem aus anorganischem Sekundärphosphat und Reaktionsmittel typischerweise noch keine Suspensionen. Der Feuchtegehalt beziehungsweise der Wasseranteil in Suspensionen liegt deutlich höher, weswegen sich die vorliegende Erfindung von konventionellen Verfahren, die mit Suspensionen arbeiten, gerade abgrenzt.

In einer bevorzugten Ausführungsform der Erfindung wird der Feuchtegehalt in einem Bereich von 15-35 % eingestellt. In diesem Bereich sind eine einfache Handhabung, eine gute Homogenisierbarkeit, beispielsweise mit Rührwerken oder im Intensivmischer, sowie eine ausreichende Reaktivität zwischen anorganischem Sekundärphosphat und Reaktionsmittel gegeben. In einer besonders bevorzugten Ausführungsform der Erfindung wird der Feuchteanteil in einem Bereich von 15-30 % eingestellt. Vorteil dieser Einstellung des Feuchtegehalts ist, dass entsprechend weniger Flüssigkeit am Ende des Prozesses zur Bildung der Nährstoffgranulate durch thermische Trocknung abgetrennt werden muss, was besonders kostengünstig ist, aber der Feuchtegehalt noch ausreicht, damit die Reaktion weitegehend ohne Krustenbildung und Ausbildung harter Agglomerate abläuft.

Im Prozessschritt b) wird vorzugsweise eine erdfeuchte Rohstoffmischung mit einem gegenüber dem erdfeuchtes bis plastisch leicht formbares Gemisch aus Prozessschritt a) reduzierten Feuchteanteil von weniger als 35 % durch die Zuführung von mindestens einer festen Komponente zu dem Gemisch aus Prozessschritt a) erzeugt.

Feste Komponenten sind hier vorzugsweise all diejenigen Stoffe, die in fester Form, bevorzugt in Pulverform, vorliegen. Diese festen Komponenten können auch einen Feuchteanteil aufweisen, Im Sinne der Erfindung ist dieser Feuchteanteil jedoch kleiner als der Feuchtegehalt, den das erdfeuchte bis plastisch leicht formbare Gemisch aus Prozessschritt a) aufweist. Durch das Zufügen dieser mindestens einen festen Komponente reduziert sich der prozentualen Feuchtegehalt in der resultierenden Mischung im Vergleich zum Gemisch aus Prozessschritt a). Ein Ziel in diesem Prozessschritt ist die Reduzierung des Feuchtegehalts durch das Zuführen mindestens einer festen Komponente in der dann resultierenden erdfeuchten Rohstoffmischung im Vergleich zum Gemisch aus Prozessschritt a).

Je geringer der Feuchtegehalt der festen Komponente ist, desto stärker kann der Feuchtegehalt in der resultierenden Mischung bei Zugabe der gleichen Menge gesenkt werden. In einer bevorzugten Ausführungsform der Erfindung liegt der Feuchtegehalt mindestens einer zugeführten festen Komponente deshalb bei kleiner 10 %, besonders bevorzugt bei kleiner 5 %, ganz besonders bevorzugt bei kleiner 3 %. Dadurch kann entweder bei entsprechend gleicher Zuführmenge an fester Komponente der Feuchtegehalt in Gemisch aus Prozessschritt a) zum Erreichen der Zielfeuchte höher sein. Ein höherer Feuchteanteil in dem Gemisch in Prozessschritt a) begünstigt dabei die Reaktion zwischen anorganischem Sekundärphosphat und dem Reaktionsmitteln und macht diese Reaktion besser und homogener steuerbar. Es kann im Sinne der Erfindung auch bevorzugt sein, dass diese feste Komponente mit entsprechendem niedrigem Feuchtegehalt als Kompensation für andere zugeführte Komponenten (weitere Komponente) dient, deren Feuchtegehalt höher liegt, dadurch dann aber auch in dieser Kombination nutzbar beziehungsweise einsetzbar sind.

Als weitere Komponenten sind hier vorzugsweise diejenigen Stoffe zu verstehen, die die Prozessführung und/oder die Eigenschaften der Nährstoffgranulate verbessern können, so beispielsweise nährstoffhaltige Komponenten, Dispergier- und Entschäumungsmittel, Strukturstoffe, Mittel zur pH-Werteinstellung, Urease-Hemmer, Ammonium-Stabilisatoren, Huminsäure, organische Säuren und/oderWasser. Der Unterschied zwischen den festen Komponenten und den weiteren Komponenten liegt vorzugsweise darin, dass die weiteren Komponenten einen Feuchtegehalt größer des Feuchtegehalts des erdfeuchten bis plastisch leicht formbaren Gemischs aus Prozessschritt a) aufweisen beziehungsweise auch als Dispersion oder Lösung vorliegen können.

Im Prozessschritt b) ist es bevorzugt, dass der Feuchtegehalt der Mischung durch Zugabe von "festen" Stoffen reduziert wird, so dass der Feuchtegehalt so eingestellt und/oder reduziert wird, dass die resultierende Rohstoffmischung in einem Intensivmischer oder Granulierteller granulierbar wird. Es ist daher bevorzugt, dass die zugeführten Stoffe möglichst "trocken" sind, also eine kleinere Feuchte aufweisen. Darüber hinaus können andere Stoffe zugeführt werden, die gegebenenfalls eine höhere Feuchte aufweisen. Es ist im Sinne der Erfindung bevorzugt, dass die festen Komponenten und/oder die weiteren Komponenten einen geringeren Feuchtegehalt als das Gemisch aus Schritt a) aufweisen. Es ist darüber hinaus bevorzugt, dass die festen Komponenten und/oder die weiteren Komponenten deshalb den Feuchtegehalt reduzieren. Vorzugsweise weisen die weiteren Komponenten einen höheren Feuchtegehalt als die festen Komponenten auf. Es ist im Sinne der Erfindung bevorzugt, dass das Verhältnis zwischen festen Komponenten und den weiteren Komponenten so eingestellt wird, dass insgesamt die Feuchte des Gemischs reduziert wird.

Da in dem Prozessschritt b) erfindungsgemäß eine erdfeuchte Rohstoffmischung mit einem geringeren Feuchtegehalt als im Vergleich zu dem erdfeuchten bis plastisch leicht formbaren Gemisch aus Prozessschritt a) erzeugt werden soll, liegt erfindungsgemäß der gemittelte Feuchtegehalt der im Prozessschritt b) zugegebener Komponenten niedriger als der Feuchtegehalt des erdfeuchten bis plastisch leicht formbaren Gemisch aus Prozessschritt a).

Typischerweise enthält die erfindungsgemäße erdfeuchte Rohstoffmischung einen Feuchtegehalt von 10 bis kleiner 35 %. Erdfeuchte Rohstoffmischungen mit diesem Feuchtegehalt eignen sich zur Granulier- bzw. Extrusion. In einer bevorzugten Ausführungsform der Erfindung wird der Feuchtegehalt im Bereich von 10-25 % eingestellt. Derartige Feuchtegehalte eignen sich typischerweise besonders gut für die Granulation, beispielsweise mittels Pelletier- oder Granuliertellern, Granuliertrommel, oder Intensivmischer. In einer besonders bevorzugten Ausführungsform der Erfindung wird der Feuchteanteil im Bereich 10 - 20 % eingestellt. Vorteil dieses relativ geringen Feuchtegehalts ist, dass entsprechend weniger Flüssigkeit nach der Granulierung durch thermische Trocknung abgetrennt werden muss, was besonders kostengünstig ist.

In einer bevorzugten Ausführungsform der Erfindung wird mindestens eine nährstoffhaltige Komponente als feste und/oder weitere Komponenten zugegeben. Nährstoffhaltige Komponenten sind Stoffe, die das Nährstoffangebot für die angebauten Pflanzen liefern oder ergänzen, um das Wachstum und die Entwicklung der Pflanzen zu steuern beziehungsweise zu unterstützen. Die nährstoffhaltigen Komponenten beinhalten beispielsweise Stickstoff (N), Phosphat (P), Kalium (K), Magnesium (Mg), Schwefel (S), lebensnotwendige Spurenelemente einzeln oder in Kombination. Beispielsweise durch die Möglichkeit zur Zugabe von nährstoffhaltigen Komponenten kann die Nährstoffzusammensetzung im Düngergranulat genau an die boden- und pflanzenspezifischen Bedürfnisse angepasst werden. Zudem kann dadurch auch die typische Schwankungsbreite der Zusammensetzung des anorganischen Sekundärphosphates kompensiert werden, um so eine gleichmäßige Düngerqualität sicherzustellen.

In einer besonders bevorzugten Ausführungsform der Erfindung werden zusätzliche Phosphatträger, zum Beispiel Ammoniumphosphat, Kaliumphosphat, Kristallisationsprodukte aus der Phosphorelimination (wie Struvit, Brushit oder hydroxyxlapatitähnliche Ca-P-Phase), im Bereich von 1 bis 70 % zugegeben, so dass dadurch ein Nährstoffgranulat mit einem Gesamt-P2O5-Gehalt von größer 15 % und einem neutral-ammoniumcitratlöslichen Phosphatanteil davon von größer 80 % jeweils auf die Zusammensetzung des Nährstoffgranulates bezogen resultiert.

In einer ganz besonders bevorzugten Ausführungsform der Erfindung werden Kristallisationsprodukte aus der Phosphorelimination im Bereich von 10 bis 30 % auf die Zusammensetzung nach der Granulierung bezogen zugegeben. Dadurch resultieren Nährstoffgranulate mit einem Gesamt-P2O5-Gehalt von größer 15 %, mit einem neutral-ammoniumcitratlöslichen Phosphatanteil davon (also bezogen auf Gesamt-P2O%) von größer 80 % und einem wasserlöslichen Phosphatanteil (bezogen auf Gesamt-P2O%) von kleiner 30 % jeweils auf die Zusammensetzung des Nährstoffgranulates bezogen resultiert.

In einer anderen ganz besonders bevorzugten Ausführungsform der Erfindung werden Kristallisationsprodukte aus der Phosphorelimination im Bereich von 30 bis 70 % auf die Zusammensetzung nach der Granulierung bezogen zugegeben. Dadurch resultieren Nährstoffgranulate mit einem Gesamt-P2O5-Gehalt von größer 25 %, mit einem neutral-ammoniumcitratlöslichen Phosphatanteil davon (also bezogen auf Gesamt-P2O%) von größer 85 % und einem wasserlöslichen Phosphatanteil (bezogen auf Gesamt-P2O%) von kleiner 20 % jeweils auf die Zusammensetzung des Nährstoffgranulates bezogen resultiert.

In einer weiteren bevorzugten Ausführungsform der Erfindung wird als feste und/oder weitere Komponente mindestens ein Strukturstoff in Summe mit einem Anteil von 0,1 % bis 50 % bezogen auf das fertige Nährstoffgranulat zugegeben, der anorganisch, organisch oder ein Gemisch daraus sein kann. Als derartige Strukturstoffe können beispielsweise Torf, Humus, Pyrolysesubstrate aus Biomasse, Biokohle aus der Hydrothermale Carbonisierung (HTC), bevorzugt getrockneter Klärschlamm oder Gärreste, Tierausscheidungen, Tier- und Fischmehl, Mineral- und Gesteinsmehle zugegeben werden. Je nach Art und Konzentration des mindestens einen Strukturstoffs kann die Düngewirkung eingestellt und/oder eine bodenverbessernde Wirkung beim Einsatz der Nährstoffgranulate erzielt werden.

Eine gezielte Bodenverbesserung kann durch das Zufügen eines Strukturstoffs in dem Düngegranulat insbesondere dann erreicht werden, wenn der Strukturstoff beispielsweise zu einer Humusbildung, zur Verbesserung der Bodenstruktur und/oder zu einer Verbesserung des Luft- und Wasserhaushalts des Bodens bei Anwendung der Nährstoffgranulate in der Landwirtschaft führt. Dies kann beispielsweise das Wurzelwachstum fördern, das Bodenleben aktivieren und/oder die Pflanzenvitalität gegen Stresssituationen stimulieren. So wird in einer besonders bevorzugten Ausführungsform der Erfindung 5 bis 50 % Strukturstoff zugegeben, da überraschenderweise festgestellt wurde, dass in diesem Konzentrationsbereich insbesondere die Humusbildung sehr stark gefördert und dadurch eine besonders gute Boden- und Strukturverbesserung bewirkt wird. Ganz besonders bevorzugt ist dabei jedoch, dass das gebildete Granulat einen Kohlenstoffanteil von größer 5 bis 25 % enthält, da unerwartet festgestellt wurde, dass gerade in diesem Bereich zusätzlich zu der Humusbildung insbesondere der Luft- und Wasserhaushalt des Bodens besonders günstig für das Wachstum von beispielsweise Wintergerste und Mais eingestellt wird.

Die Düngewirkung wird vorteilhafterweise dadurch beeinflusst, dass durch das Zufügen des Strukturstoffs die Struktureigenschaften des erzeugten Nährstoffgranultes und damit dessen Eigenschaften, wie beispielsweise die Porosität, Größe der Poren, die Festigkeit oder Löslichkeit, eingestellt werden. Dadurch können beispielsweise die Nährstofffreisetzung gezielt an das Pflanzenwachstum und den zeitlich abhängigen Nährstoffbedarf der Pflanze angepasst werden. Deshalb wird in einer besonders bevorzugten Ausführungsform der Erfindung 0,1 % bis kleiner 5 % Strukturstoff zugegeben. Durch diese verhältnismäßig geringe Konzentration können besonders viele Nährstoffkomponenten im Düngemittel integriert werden, was vorteilhafterweise die Düngewirkung der Granulate in diesem Ausführungsbeispiel der Erfindung überraschenderweise wesentlich verstärkt. Festgestellt wurde nun aber überraschenderweise, dass gerade der Anteil an Strukturstoff in diesem Bereich zu einer Porenstruktur führt, die die Löslichkeit dieser Nährstoffkomponenten sehr begünstigt. Dadurch sind die Nährstoffe wesentlich besser pflanzenverfügbar. Ganz besonders bevorzugt ist dabei ein Anteil an Strukturstoff von 0,1 - 2,5 %, da gerade in diesem Bereich eine gute Porosität für eine gute Löslichkeit gegeben und zusätzlich in diesem Konzentrationsbereich eine besonders gute Verteilung kleiner Poren in der Grundstruktur gegeben sind, woraus eine besonders hohe Festigkeit resultiert.

Sollen als Strukturstoffe Reststoffe, beispielsweise organische Mehle oder bevorzugt getrockneter Klärschlamm, eingesetzt werden, so besteht grundsätzlich Kontaminationsgefahr und die Gefahr der Verbreitung von Krankheitserreger und damit die Möglichkeit, dass Krankheitserreger über Nahrung und Futtermittel zu Mensch und Tier gelangen und diese damit gefährden. Deshalb wird bei Einsatz von einem oder mehreren Reststoffen als Strukturstoff in einer bevorzugten Ausführungsform der Erfindung einen Hygienisierungsschritt zur Unterbrechung von Infektionskreisläufen durch Abtötung von Krankheitserregern, Bakterien etc. in das erfindungsgemäße Verfahren integriert. Zur Hygienisierung stehen Verfahren, wie beispielsweise das Zumischen von chemischen oder bakterientötenden Agenzien, eine Hygienisierung durch extreme pH-Wert-Verschiebung (beispielsweise durch Zugabe von gebranntem Kalk oder Kalkhydrat) oder eine thermische Behandlung zur Verfügung. Ein solches Verfahrensschritt zur Hygienisierung des oder der kritischen Reststoffe kann an geeigneter Stelle durchgeführt werden. So kann eine solche Hygienisierung dieser Reststoffe vor der Zugabe des Reststoffs als Strukturstoff zur Rohstoffmischung im Prozessschritt b) erfolgen. So kann beispielsweise ein Reststoff mit gebranntem Kalk zunächst separat gemischt und das Gemisch nach ausreichend langer Einwirkzeit dem Gemisch im Prozessschritt b) zugegebenen werden. Alternativ kann eine solche Hygienisierung auch beispielsweise nach Zugabe des kritischen Reststoffs als Strukturstoffs zu der Rohstoffmischung durch eine thermische Behandlung von mindestens 10 Minuten, bevorzugt größer 20 Minuten und oberhalb 60 °C, besonders bevorzugt oberhalb 75 °C, erfolgen. Durch diese Temperatureinwirkung werden die Pathogene weitgehend abgetötet. Die thermische Behandlung kann so beispielsweise im Prozessschritt b) erfolgen oder auch bei der Trocknung der erzeugten Grüngranulate.

Auch können Mittel zur pH-Wert-Einstellung, so beispielsweise Laugen, Hydroxide, basische Salze, Ammoniak oder gebrannter Kalk als feste und/oder weitere Komponenten zugefügt werden. Dadurch können beispielsweise noch vorhandene Säure- oder Laugenreste (bei Einsatz oder Bildung von Säuren oder Laugen) neutralisiert und/oder der pH-Wert des erzeugten Düngemittels gezielt eingestellt werden. Auch kann durch die Zugabe dieser Stoffe gegebenenfalls die Viskosität und die Bindeeigenschaften beeinflusst werden. In einer bevorzugten Ausführungsform der Erfindung werden die Mittel zur pH-Wert-Einstellung so ausgewählt und zugesetzt, dass die Neutralisation mit noch vorhandenen Säureresten so zeitlich abläuft, dass die durch die exotherme Reaktion freigesetzte Wärme zur Trocknung der gebildeteren Granulate im Prozessschritt c) genutzt werden kann. Dies spart sonst notwendige Trocknungsenergie. Eine solche zeitliche Verzögerung in Reaktion und Reaktionsgeschwindigkeit kann beispielsweise durch den Einsatz von festen Mittel zur pH-Wert-Einstellung wie beispielsweise Hydroxide (z.B. Ca(OH)2, NaOH, KOH) anstatt von beispielsweise Laugen (z.B. Natronlauge, Kalilauge) erreicht werden.

In einer bevorzugten Ausführungsform der Erfindung werden Huminsäure und/oder Fulvosäure und/oder deren Salze (Humate, Fulvate) zugegeben. Diese Stoffe weisen insbesondere wachstumsfördernde Eigenschaften auf. So wird die Nährstoffaufnahmekapazität der Wurzel wesentlich erhöht und regt somit das Wachstum an. Durch ihre Zugabe werden das Pflanzenwachstum und die Zellbildung gefördert. Sie stimulieren die Zellmembranen sowie die Stoffwechselaktivitäten und erhöhen dadurch die Keimraten. Auch werden wichtige Pflanzenenzyme durch sie angeregt. Die kräftige Wurzelausbildung unterstützt die Nährstoffaufnahmekapazität. Die so gestärkten Pflanzen sind deutlich weniger anfällig gegen Krankheiten. Durch die Zugabe dieser Stoffe kann die P-Aufnahme der Pflanzen erhöht werden, da es die P-Adsorption des Bodens blockiert und durch Komplexierung von Ca, Al, Fe das Ausfällen von P in schwerlösliche Verbindungen verhindert. Überraschenderweise wurde festgestellt, dass durch Zugabe dieser Stoffe in Summe von 0,1 - 25 % (bezogen auf das erzeugte Düngemittelgranuat) eine deutliche Steigerung des pflanzenverfügbaren P im Boden und damit eine erhöhte P-Aufnahme der Pflanzen resultieren. Besonders bevorzugt ist die Zugabe dieser Stoffe in Summe von 0,1 - 10 %, da bereits in diesem Mengenbereich eine erhebliche Steigerung der Düngewirkung erreicht wird und folglich die notwendige Düngermenge entsprechend um bis zu 40 % reduziert werden kann. Ganz besonders bevorzugt ist die Zugabe dieser Stoffe in Summe von 0,1 - 5 %, da in diesem Bereich ein besonders günstiges wirtschaftliches Verhältnis zwischen den Kosten für diese Stoffe und den resultierenden verbesserten Eigenschaften resultiert.

In einer weiterhin bevorzugten Ausführungsform der Erfindung wird organische Säure besonders bevorzugt in fester Form zugegeben. Organische Säuren sind beispielsweise Ascorbinsäure, Essigsäure, Ameisensäure, Gluconsäure, Äpfelsäure, Bernsteinsäure, Oxalsäure, Weinsäure oder Zitronensäure, ohne darauf beschränkt zu sein. Organische Säuren spielen bei der Phosphataufnahme der Pflanzen aus dem Boden eine wesentliche Rolle. Insbesondere durch das Vorhandensein von organischen Säuren am Wurzelwerk können die Pflanzen ausreichend P aufnehmen, wobei typischerweise Mikroorganismen diese organischen Säuren im Ökosystem bilden. Überraschenderweise wurde nun festgestellt, dass die Phosphataufnahme der Pflanzen erhöht wird, wenn im zugeführten Düngergranulat bereits anteilig eine oder mehrere organische Säuren bevorzugt in Summe im Bereich 0,1 bis 30 % integriert sind. Bevorzugt werden Zitronensäure, Oxalsäure oder Weinsäure einzeln oder in Kombination eingesetzt, da diese organischen Säuren verhältnismäßig kostengünstig und in ausreichenden Mengen verfügbar sind. Besonders bevorzugt ist der Einsatz von Zitronensäure, Oxalsäure oder Weinsäure einzeln oder in Kombination im Mengenbereich 0,1 % bis 10 %, da die aufnahmeverbessernde Wirkung dieser Säuren im Verhältnis zu den Rohstoffkosten hier besonders günstig ist. Die aufgeführten Anteile an organischen Säuren im Düngegranulat können dabei entweder zusätzlich als weitere Komponente zugegeben werden und/oder bei Einsatz organischer Säuren als Reaktionsmittel nach der Reaktion (vorzugsweise zumindest anteilig weiter in diesem Mengenbereich) vorliegen und so in das Düngergranulat überführt werden.

Die eingesetzten festen und/oder weiteren Komponenten können einzeln oder in Kombination vor der Zugabe gemahlen werden. Dies ist beispielsweise dann vorteilhaft, wenn die vorliegende Partikel- oder Aggregatgröße einzelner oder mehrerer Einsatzstoffe nicht ausreichend fein genug ist, um beispielsweise eine ausreichende Homogenität oder Reaktivität zu erreichen. Durch die Reduzierung der Partikel- beziehungsweise Aggregatgröße kann dies gegebenenfalls verbessertet werden. Auch kann typischerweise die Löslichkeit von Stoffen oder beinhaltetet Verbindungen verbessert oder die Bindewirkung bei der Granulation erhöht werden. Je nach Art des zu vermahlenden Stoffes und der gewünschter Korngröße und Korngrößenverteilung können unterschiedliche Trocken- oder Nassmahl-Technologien mit oder ohne Mahlhilfen dazu eingesetzt werden. Die zur Trocken- oder Nassmahlung verwendeten Aggregate können beispielsweise Kugelmühlen, Stiftmühlen, Strahlmühle oder Perlmühlen, Rührwerkskugelmühlen sein.

Die Reihenfolge der Zugabe der festen und/oder weiteren Komponenten kann dabei je nach Erfordernis der Prozessführung und/oder der eventuell gewünschten Reaktionsabfolge erfolgen. So kann bzw. können beispielsweise bereits im Prozessschritt a) alle oder ein Teil der weiteren Komponenten und/oder zumindest ein Teil der festen Komponenten zugegeben werden. Die Zugabe kann dabei zu der bereits erzeugten Mischung aus mindestens einem anorganischen Sekundärrohstoff und mindestens einem Reaktionsmittel und/oder aber auch während der Erzeugung dieser Mischung zugegebenen werden. Möglich ist dabei auch, dass alle oder ein Teil dieser Komponenten vorgelegt werden und erst dazu das mindestens einem anorganischen Sekundärphosphat und mindestens einem Reaktionsmittel oder die Komponenten zur Bildung dieser Mischung zugeführt werden. Alternativ werden alle oder ein Teil der weiteren Komponenten erst im Prozessschritt b) vorgelegt und/oder zugeführt.

Auch können in dem Prozessschritt b) moderate Mengen an flüssigen Komponenten zum Beispiel zur Regulierung beziehungsweise Einstellung der Konsistenz und/oder der Granulier- bzw. Extrudiereigenschaften zugegebenen werden. Bei der Auswahl und Kombination der eingesetzten Komponenten ist es im Sinne der Erfindung bevorzugt, dass erfindungsgemäß im Prozessschritt b) eine erdfeuchte Rohstoffmischung mit einem reduzierten Feuchteanteil gegenüber Prozessschritt a) von weniger als 35 % im Vergleich zum erdfeuchten bis plastisch leicht formbaren Gemisch aus Prozessschritt a) erzeugt wird.

Die Zuführung der festen und gegebenenfalls weiteren Komponenten kann auf eine dem Fachmann bekannte Art und Weise erfolgen. Beispielsweise kann die Zuführung im gleichen Mischbehälter, in dem das erdfeuchte bis plastisch leicht formbare Gemischs im Prozessschritt a) erzeugt wird und/oder bei der Überführung des erdfeuchten bis plastisch leicht formbaren Gemischs aus Prozessschritt a) in Prozessschritt b) und/oder in einem separaten Mischgerät erfolgen. Das Mischgerät kann beispielsweise ein Mischbehälter mit Rührwerk, Wälzmischer, der vorzugsweise auch als Fall-, Trommel- oder Rotationsmischer bezeichnet wird, Schermischer, Zwangsmischer, Pflugscharmischer, Planeten-Mischkneter, Z-Kneter, Sigma-Kneter, Fluidmischer oder Intensivmischer sein. Die Auswahl des geeigneten Mischers hängt unter anderem von der Rieselfähigkeit und Kohäsionskräfte des Mischgutes ab.

Das Zusammenführen und Mischen zum Erzeugen des erdfeuchten Gemischs kann auch so gesteuert werden, dass bereits eine (Vor)-Granulation einsetzt. Dabei kann es beispielsweise vorteilhaft sein, wenn sogenannte Granulatkeimlinge gebildet werden und diese dann beispielsweise die Granulierung auf einem Granulierteller zu größeren Granulaten begünstigen. Der Begriff "Granulatkeimling" steht im Sinne der Erfindung bevorzugt für einen Kern, der im weiteren Granulationsprozess als Basis für eine Aufgranulation zu größeren Granulaten dient und/oder diesen Prozess begünstigt.

Im Prozessschritt c) erfolgt die Granulierung und/oder Extrudierung der erdfeuchten Rohstoffmischung und gegebenenfalls einer Trocknung der erzeugten Grüngranulate bzw. Grünextrudate.

Die erfindungsgemäße Granulation und/oder Extrusion kann während des Zumischens der festen und/oder weiteren Komponenten und/oder daran anschließend erfolgen, entweder im gleichen Mischgerät oder in einer separaten Granulier- beziehungsweise Extrusionseinheit, erfindungsgemäss Pelletier- oder Granuliertellern, Granuliertrommel, oder Intensivmischern.

Vorzugsweise hat der Anteil der eingestellten Feuchte, d.h. der flüssigen Phase, in diesem Prozessschritt erheblichen Einfluss auf die Art der Granulation, die Produktqualität und die Wirtschaftlichkeit des Verfahrens. Der Gesamtanteil der Feuchte beziehungsweise der flüssigen Phase kann vor der Granulation und/oder Extrusion beispielsweise über die Prozessführung im Prozessschritt a) und b) und/oder durch Zugabe von flüssigen Komponenten (z.B. Wasser, Nährstofflösungen) nach Prozessschritt b), beispielsweise beim Granulieren, eingestellt werden. Auch kann bei Bedarf eine teilweise Trocknung vor der Granulation erfolgen, um beispielsweise den Gesamtanteil der flüssigen Phase vor der Granulation/Extrusion weiter einzustellen. Die zur Granulation erforderliche Klebeneigung kann, gegebenenfalls zusätzlich, auch durch unterschiedliche Stoffe, wie beispielsweise Bindemittel, eingestellt werden. Gegebenenfalls kann bei oder nach der Ausbildung der Grüngranulate ein Pulver zugegeben und die Grüngranulate damit gepudert werden, um die Klebeneigung zwischen den Grüngranulaten zu vermindern. In einer bevorzugten Ausführungsform der Erfindung erfolgt dieses Pudern mit einer phosphathaltigen Asche.

In einer bevorzugten Ausführungsform der Erfindung wird das erdfeuchte bis plastisch leicht formbaren Gemisch aus Prozessschritt a) mit den festen und/oder weitere Komponenten in einen Intensivmischer (zum Beispiel Intensivmischer Typ R Fa. Eirich) gegeben, wobei der Flüssigphasenanteil so eingestellt und/oder Bindemittel so zugegeben, dass durch die intensive mechanische Mischung ein Grüngranulat mit gewünschter Korngröße, bevorzugt im Bereich 1 bis 10 mm, besonders bevorzugt 2 bis 5 mm erhalten wird. Vorteil dieser bevorzugten Ausführungsform der Erfindung ist, dass eine gute Rundheit in dem bevorzugten Granulatgrößenbereich erzielt wird und die Granuliertechnologie und die Prozesskosten günstig sind.

In einer ebenfalls bevorzugten Ausführungsform der Erfindung erfolgt die Granulation auf einem Pelletier- beziehungsweise Granulierteller. Dazu wird die erdfeuchte Rohstoffmischung aus Prozessschritt b), gegebenenfalls mit den weiteren Komponenten auf dem Pelletier- beziehungsweise Granulierteller zugeführt. Bevorzugt wird eine flüssige Komponente, gegebenenfalls in Kombination mit einem darin befindlichen oder separat zugeführten Bindemittel, auf dieses Gemisch auf dem Granulierteller aufgesprüht. In einem bevorzugten Fall ist die flüssige Komponente beispielsweise Wasser. Durch die Drehbewegung formen sich die Grüngranulate, die bei und/oder nach der Granulation zur Ausbildung der Düngergranulate getrocknet werden können. Vorteil dieser Ausführungsform der Erfindung ist, dass die Granulation und die notwendige Technologie besonders kostengünstig sind. Zudem ist diese einfache Granulationstechnologie wenig reparaturanfällig.

Typischerweise besteht die Anforderung, dass Düngergranulat eine geringe Feuchtigkeit, d.h. physikalisch gebundenes Wasser, aufweist. Eine typische Anforderung ist hier, dass die Feuchte kleiner 5 %, bevorzugt kleiner 2 % sein soll. Je nach Art der Granulation und der Prozessführung kann diese Anforderung für die Feuchtigkeit bereits bei der Granulation erzielt werden. Gegebenenfalls können die erzeugten Granulate nach der Granulation und/oder Extrusion noch getrocknet oder zumindest zusätzlich nachgetrocknet werden. Dafür stehen unterschiedliche Trocknungstechnologien zur Verfügung, so beispielsweise Kontakttrockner, konvektive Trockner und/oder Strahlungstrockner. Bei einer Kontakttrocknung wird die zur Trocknung notwendige thermische Energie vorzugsweise durch den Kontakt mit einer Heizfläche zugeführt. Bei einer konvektiven Trocknung wird die zur Trocknung notwendige thermische Energie bevorzugt durch den Kontakt mit Heißgas zugeführt. Bei einer Strahlungstrocknung wird die zur Trocknung notwendige thermische Energie wird hauptsächlich durch Strahlung definierter Frequenz zugeführt. Durch die Trocknung wird die vorhandene flüssige Phase, zum Beispiel das Wasser, im erforderlichen Maße abgetrennt. Gegebenenfalls erfolgt durch die Trocknung auch ein Festigkeitsanstieg der Granulate, zum Beispiel indem sich bindende Phasen durch die Trocknung bilden oder beispielsweise indem ein Bindemittel dadurch seine Bindewirkung ausbildet.

In einer vorteilhaften Ausführungsform der Erfindung erfolgt die Trocknung durch Eigenwärme der erzeugten Granulate oder wird dadurch zumindest unterstützt. Die Eigenwärme erhalten die Granulate durch Erwärmen. Beispielsweise kann eine Erwärmung der Granulate prozessbedingt durch den Granulations- und/oder Extrusionsprozess oder durch chemische Reaktion erfolgen. Beim Granulations- und/oder Extrusionsprozess kann beispielsweise ein Eintrag mechanischer Energie erfolgen, wobei die mechanische Energie in Wärmeenergie umgewandelt wird. So liefern beispielsweise die Reaktion zwischen CaO und Säure und/oder Wasser oder die Reaktion zwischen Schwefelsäure und Wasser (beim Verdünnen) exotherme Energie, die zum Erwärmen der Rohstoffdispersion und/oder der geformten Granulate genutzt werden kann.

Werden Kristallisationsprodukte aus der Phosphorelimination, wie beispielsweise Struvit, Brushit und/oder hydroxyxlapatitähnliche Ca-P-Phase, der Rohstoffmischung zugeführt und sind folglich im erzeugten Granulat insbesondere im Grüngranulat, enthalten, erfolgt die Trocknung in einer bevorzugten Ausführungsform der Erfindung oberhalb 100°C bezogen auf die Materialtemperatur bei der Trocknung. Diese Kristallisationsprodukte enthalten einen großen Anteil chemisch gebundenen Wassers, die vorzugsweise keine Feuchte im Sinne der Erfindung darstellt, sondern in der Kristallstruktur eingebunden ist. Im Bereich oberhalb 100 °C wird dieses chemisch gebundene Wasser abgespaltet. Durch das Abtrennen des Wassers aus dem Granulat erhöht sich der prozentuale Anteil der verbleibenden Komponenten. So kann beispielsweise die Konzentration an Nährstoffen im Granulat erhöht werden, die zuvor durch das chemisch gebundene Wasser quasi entsprechend verdünnt vorlagen.

In einer besonders bevorzugten Ausführungsform der Erfindung erfolgt die Trocknung, wenn Kristallisationsprodukte aus der Phosphorelimination enthalten sind, in einem bevorzugten Bereich von 100-140°C bezogen auf die Materialtemperatur bei der Trocknung. Oberhalb 140°C besteht die Gefahr, dass zunehmend Stickstoff abgespalten wird. Damit ist ein unerwünschter Stickstoffverlust aus dem Granulat verbunden, zudem muss der Ablauf entsprechend aufwendiger gereinigt werden. Durch die Begrenzung auf max. 140 °C in dieser Ausführungsform der Erfindung kann dies weitgehend vermieden werden. In einer ganz besonderen Ausführungsform der Erfindung erfolgt die Trocknung in einem besonders bevorzugten Bereich zwischen 120°C und 140°C.

An das Nährstoffgranulat werden verschiedene Anforderungen gestellt. Zum einen soll das Granulat möglichst formgenau herstellbar sein. Eine möglichst gleiche Größe stellt beispielsweise definierte, gleichmäßige Zerfallseigenschaften und günstige Flugeigenschaften beim Ausbringen auf Felder mittels Streufahrzeug sicher, was für eine gezielte Nährstoffzuführung notwendig ist. Da zudem das Vorliegen von Überkorn oder Unterkorn die maschinelle Ausbringung des Düngemittels beeinträchtigen kann, kann Über- und Unterkorn von dem Gutkorn getrennt und gegebenenfalls dem Produktionsprozess, insbesondere dem Misch- und/oder Granulierprozess, gegebenenfalls mit vorheriger Aufbereitung und/oder Aufmahlung, rückgeführt werden. Der Begriff "Gutkorn" beschreibt im Sinne der Erfindung bevorzugt solches Granulat im gewünschten Größenbereich. Die Rückführung des aufbereiteten Über- und Unterkorns kann dabei in Prozessschritt a), b) und/oder c) erfolgen. In einer bevorzugten Ausführungsform der Erfindung wird zumindest ein Teil des Über- und/oder Unterkorn aufgemahlen als feinteiliges Pulver als Trennmittel auf die erzeugten Grüngranulate bei beziehungsweise nach der Granulierung aufgebracht.

Weiterhin wird häufig eine gute Bindung innerhalb des Granulats verlangt, um beispielsweise auch nach längerer Lagerung Staubverluste beim Ausbringen des Düngemittels zu vermeiden. Die Festigkeit der Granulate kann beispielsweise über die Prozessführung eingestellt werden. So haben beispielsweise die Trocknungsgeschwindigkeit und die Art der Granuliertechnologie beziehungsweise der Granulierprozessführung Einfluss auf die Porosität und Kompaktheit und damit auf die Festigkeit der Granulate und kann darüber beeinflusst werden. Die Festigkeit kann auch beispielsweise über die Art und Feinheit der Rohstoffkomponenten beeinflusst oder durch die Zugabe von Bindemittel erhöht werden.

Die erfindungsgemäß erzeugten Nährstoffgranulate können eine oder mehrere Beschichtungen zur Funktionalisierung (z.B. Reduzierung der Verklumpungsneigung, Erhöhung der Festigkeit), zum Schutz (z.B. vor Feuchtigkeit) und/oder zur gesteuerten Nährstofffreistellung (Beeinflussung der Löslichkeit durch das Coating) erhalten. Im Sinne der Erfindung sind alle Verfahren und Technologien bevorzugt, die eine gewünschte Beschichtung erzeugen. In einer bevorzugten Ausführungsform der Erfindung erfolgt eine solche ein- oder mehrschichtige Beschichtung direkt im Anschluss an die Granulation im Granuliergerät, indem beispielsweise das oder die Beschichtungskomponenten nach der Granulatformung dem Granuliergerät zugeführt werden und die Granulate durch die mechanische Bewegung der Granulate im Granuliergerät beschichten werden.

Zur Bildung der erfindungsgemäßen Nährstoffgranulate werden die Prozessschritte a) bis c) des erfindungsgemäßen Verfahrens durchlaufen. Dabei können die einzelnen Prozessschritte als batchweise und/oder kontinuierliche Prozesse ausgebildet sein, wobei zwischen den Prozessschritten Pufferbehälter eingesetzt werden können. Zur Realisierung der Prozessschritte kann dabei jeweils ein einzelnes Aggregat und/oder aber, insbesondere zur Abbildung größerer Produktionsmengen, mehrere gleiche oder ähnliche Aggregate verwendet werden. Mehrere Aggregate in einem oder mehreren Prozessschritten können dabei parallel und/oder alternierend geschaltet sein. Bei einer Produktion der erfindungsgemäßen Nährstoffgranulate erfolgt der batchweise und/oder kontinuierliche Ablauf der Verfahrensschritte a) bis c) fortlaufend bis zum Erreichen der gewünschten Produktionsmenge.

Aus den weiteren Unteransprüchen und der nachfolgenden Beschreibung sind weitere Vorteile, Merkmale und Einzelheiten der Erfindung zu entnehmen. Dort und zuvor erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden. In den nachfolgenden Beispielen beschrieben alle Beispiele nicht erfindungsgemässe Verfahren.

### Beispiel 1 (nicht erfindungsgemäß, zur Illustration des Standes der Technik):

Dieses Ausführungsbeispiel gemäß DE 10 2010 034 042 B4 ist nicht erfindungsgemäß, zeigt jedoch den grundsätzlichen Ansatz der Erhöhung der Löslichkeit der Phosphatphase aus phosphathaltigen Verbrennungsaschen. Dazu werden in einem kontinuierlich arbeitenden Doppelwellenpaddelmischer 330 kg Klärschlammasche (P2O5-Gehalt 18 %, davon neutral-ammoniumcitratlöslich 38 % und <1 % wasserlöslich), 140 kg Phosphorsäure (72,5 %ig) und 132 kg Ammoniumsulfat vermischt, wobei die Asche mit der Säure reagiert und das Gemisch zu einem NP-Mehrnährstoffdünger mit der Wertigkeit N= 5 %, P2O5 = 23 %, S = 5 % umgewandelt werden soll.

Dies gelingt jedoch nur mit erheblichen Schwierigkeiten. Problematisch ist dabei die heftig ablaufende Reaktion zwischen Asche und Säure, die zu Verkrustung, Ablagerungen und Verstopfungen führt. Die erzeugte Masse aus Asche und Säure ist sehr zäh und klebrig und damit sehr schlecht handelbar, der Granulationsprozess wird dadurch massiv behindert. Zudem greift das Säuregemisch den eingesetzten Mischer korrosiv an.

Das erzeugte Granulat weist eine inhomogene Kornverteilung in Klumpenform mit vergleichsweise geringer Festigkeit auf. Der P2O5-Gesamtgehalt liegt in einer wasserlöslichen Form vor.

### Beispiel 2 (nicht erfindungsgemäß, zur Illustration des Standes der Technik):

Dieses Ausführungsbeispiel gemäß DE 10 2016 116 633 A1 ist nicht erfindungsgemäß, zeigt jedoch eine Möglichkeit der Trennung von der Reaktion zwischen Phosphatträger und Säure von dem Granulationsprozess aus dem Stand der Technik. Dazu wird in einem Mischbehälter aus 330 kg Klärschlammasche (P2O5-Gehalt 18 %, davon neutral-ammoniumcitratlöslich 38 % und <1 % wasserlöslich), 140 kg Phosphorsäure (72,5 %ig), 132 kg Ammoniumsulfat und 350 kg Wasser eine niedrigviskose, gut versprühbare Rohstoffsuspension hergestellt.

Die Summe der zugegebenen flüssigen Phase zu der Suspension ist 490 kg (53%). Durch den Löseprozess wird ein erheblicher Anteil der zugegebenen festen Komponenten (Asche, Ammoniumsulfat) gelöst, so dass der Anteil der flüssigen Phase in der Suspension deutlich darüber liegt. Nur mit einem solch hohen Anteil an flüssiger Phase stellt sich eine versprühbare Suspension ein.

Der Feststoffgehalt der so erzeugten Rohstoffdispersion liegt bei ca. 59 % und folglich die Feuchte bei 41 %. Der Begriff "Feststoffgehalt" soll dabei im Kontext der vorliegenden Erfindung als die Menge Dünger verstanden werden, die durch Trocknung bei 105°C aus der Rohstoffmischung, hier Suspension, erzeugt wird. Der Feststoffanteil ist höher als der Anteil der festen Phase in der Suspension, da durch die Trocknung gelöste Komponenten aus der flüssigen Phase in die Feste übergehen. Ein signifikant höherer Feststoffanteil ist im technischen Betrieb kaum realisierbar, da dadurch die Viskosität deutlich ansteigt, zum Teil auch erst im Verlauf der Reaktion zwischen Säure und Asche. Hohe Viskosität erschwert oder verhindert das Rühren, Fördern und Pumpen und birgt die Gefahr von Verstopfungen und Verkrustungen. Zudem kann dann nicht mehr von Suspensionen gesprochen werden.

Nachdem die Komponenten zusammengeführt wurden, wird eine Inkubationszeit von 45 Minuten eingehalten, wobei in dieser Zeit weiter gerührt wird. Durch die einsetzende Reaktion zwischen Säure und Klärschlammasche erwärmt sich die Rohstoffdispersion auf ca. 40 °C. Durch die Einwirkung der Säure auf die Klärschlammasche und den sich einstellenden pH-Wert sind nach der Inkubationszeit anteilig Phosphat und weitere Stoffe gelöst.

Die so erzeugte Rohstoffdispersion wird im Anschluss daran vollständig granuliert. Zur vollständigen Granulation einer Rohstoffdispersion mit einem Feststoffgehalt von 59% stehen nur wenige Granulationsverfahren zur Verfügung. Kostengünstige Verfahren wie Granulation auf dem Granulierteller oder im Intensivmischer sind aufgrund des hohen Anteils an flüssiger Phase nicht möglich. Möglich ist beispielsweise eine Sprühgranulation. Dazu wird in diesem Ausführungsbeispiel die erzeugte Rohstoffdispersion einer kontinuierlichen Wirbelschichtanlage zur Sprühgranulation zugeführt. Die Sprühgranulation wird dabei so gesteuert, dass eine mittlere Granulatgröße von 3,5 mm resultiert. Nach der Sprühgranulation werden Granulate kleiner 2 mm und Granulate größer 5 mm durch Siebung abgetrennt und dem Sprühgranulationsprozess als Kernmaterial zugeführt, wobei die Granulate größer 5 mm zuvor aufgemahlen werden. Das erzeugte Granulat weist eine runde und kompakte Granulatform im Bereich 2-5 mm auf, einen P2O5-Gesamtgehalt von 23 %, wobei davon 92 % neutral-ammoniumcitratlöslich und 72 % wasserlöslich sind, einen Stickstoffanteil von 5 % und einen Schwefelanteil von 6 %.

Vorteil dieses Ausführungsbeispiels gegenüber Ausführungsbeispiel 1 ist, dass die Reaktion zwischen Asche und Säure in der erzeugten Rohstoffdispersion abläuft und damit kontrollierbar ist. Die weitgehend abreagierte Rohstoffdispersion enthält kaum noch freie Säure, so dass bei der Weiterverarbeitung deutlich weniger Korrosionsprobleme auftreten. Vorteil der Granulation mittels Sprühgranulation in diesem Ausführungsbeispiel ist, dass Rohstoffdispersionen (wie in diesem Ausführungsbeispiel) mit hohen Flüssigphasenanteil granuliert werden können und sehr kompakte, abriebsfeste und sphärische Granulate gebildet werden.

Wesentlicher Nachteil ist jedoch, dass der Energieverbrauch durch Trocknung des hohen Flüssigphasenanteils, durch Erzeugung eines Wirbelbetts und durch die notwendige Verdüsungsenergie sehr hoch ist.

### Ausführungsbeispiel 3 (nicht erfindungsgemäss):

Mit diesem Ausführungsbeispiel werden in einem Mischgerät 330 kg Klärschlammasche als anorganisches Sekundärphosphat (P2O5-Gehalt 18 %, davon neutral-ammoniumcitratlöslich 38 % und <1 % wasserlöslich), 140 kg Phosphorsäure (72,5 %ig) als Reaktionsmittel und 80 kg Wasser innig vermischt und so ein erdfeuchten bis plastisch leicht formbares Gemisch erzeugt.

Die Summe der zugegebenen flüssigen Phase zu dem erdfeuchten bis plastisch leicht formbares Gemisch ist 220 kg und damit prozentual 40% statt 53 % im Ausführungsbeispiel 2. Der Feststoffgehalt des so erzeugten erdfeuchten bis plastisch leicht formbares Gemisch liegt bei ca. 78,5 % statt ca. 59 % bei Ausführungsbeispiel 2 und folglich die Feuchte nur bei 21,5 %.

Nachdem diese Komponenten zusammengeführt wurden, wird eine Inkubationszeit von 45 Minuten eingehalten, wobei in dieser Zeit weiter gemischt wird. Da der Anteil an flüssiger Phase in dieser Mischung deutlich höher ist als im Ausführungsbeispiel 1, ist die Reaktion zwischen Asche und Säure besser kontrollierbar und läuft homogener ab.

Anders als in Ausführungsbeispiel 1 wird hier erst nach der Inkubationszeit, damit erst nach erheblichem Fortschreiten der Reaktion zwischen Asche und Säure, 132 kg Ammoniumsulfat als erfindungsgemäß feste Komponente dem Gemisch zugeführt. Dadurch wird der Feuchteanteil des Gemischs reduziert und es bildet sich die erdfeuchte Rohstoffmischung.

Durch die Zugabe des Ammoniumsulfats nach der Inkubationszeit erhöht sich der Feststoffgehalt der so erzeugten erdfeuchten Rohstoffmischung von 78,5 % auf ca. 82,5 % und die Feuchte reduziert sich von 21,5 % auf 17,5 %.

Diese erdfeuchte Rohstoffmischung wird einem Granulierteller zugeführt, auf dem die Granulation zu Grüngranulaten erfolgt. Vorzugsweise kann die Konsistenz und Klebeneigung der erdfeuchten Mischung punktuell an den Prozess beispielsweise durch Zugabe von Wasser angepasst werden. Auch kann ein trockener Pulverstoff (beispielsweise Klärschlammasche) als Trennmittel eingesetzt werden, um einer Verklumpung der Grüngranulate vorzubeugen. Im wesentlichen Unterschied zu Ausführungsbeispiel 1 wird hier die Granulation nicht durch die heftig ablaufende Reaktion zwischen Asche und Säure behindert, da diese weitgehend in der Inkubationszeit abläuft. Damit ist der Granulationsprozess einfacher steuerbar und es resultieren homogener Granulate. Auch ist die Korrosionsbelastung in der Granuliereinheit wesentlich geringer, da die Säure weitgehend mit der Asche reagiert hat.

Anschließend erfolgt die Trocknung der Granulate und es bildet sich das Düngergranulat mit einer Nährstoffzusammensetzung von N= 5 %, P2O5 = 23 %, wobei davon 87 % neutral-ammoniumcitratlöslich und 67 % wasserlöslich sind und S = 5 %. Das erzeugte Granulat weist eine stabile, runde und kompakte Granulatform auf. Im Unterschied zum Ausführungsbeispiel 2 weist die erdfeuchte Rohstoffmischung einen Feststoffanteil von 85 %, also eine Feuchte von 15 % auf. Folglich muss ein wesentlich kleinerer Anteil durch thermische Trocknung zur Bildung der Düngergranulate abgetrennt werden. Dies spart erhebliche Energiekosten.

### Ausführungsbeispiel 4 (nicht erfindungsgemäss):

Es werden in einem Mischgerät 50 kg Klärschlammasche als anorganisches Sekundärphosphat (P2O5-Gehalt 18 %, davon neutral-ammoniumcitratlöslich 38 % und <1 % wasserlöslich), 25 kg Schwefelsäure (95 %ig) als Reaktionsmittel und 28 kg Wasser innig vermischt und so ein erdfeuchten bis plastisch leicht formbares Gemisch erzeugt. Anschließend wird eine Inkubationszeit von 30 Minuten eingehalten, wobei in dieser Zeit weiter gemischt wird.

Der Feststoffgehalt des so erzeugten erdfeuchten bis plastisch leicht formbares Gemisch liegt bei ca. 77 % und folglich die Feuchte bei 23 %.

Nach der Inkubationszeit werden in dem gleichen Mischgerät 25 kg Harnstoff und 51 kg Monoammoniumphosphat (59 % P2O5, 11,5 % N) als feste Komponenten dem Gemisch zugeführt. Durch die Zugabe von Harnstoff und Monoammoniumphosphat nach der Inkubationszeit erhöht sich der Feststoffgehalt der so erzeugten erdfeuchten Rohstoffmischung von 77 % auf ca. 85 % und die Feuchte reduziert sich von 23 % auf 15 %.

Diese erdfeuchte Rohstoffmischung wird einem Granulierteller zugeführt, auf dem die Granulation zu Grüngranulaten erfolgt. Zur Einstellung der optimalen Konsistenz und Klebeneigung der erdfeuchten Mischung wird punktuell Wasser auf die erdfeuchte Mischung auf dem Granulierteller zugesprüht.

Anschließend erfolgt die Trocknung der Granulate auf einen Feuchtegehalt von 3 % und es bildet sich das Düngergranulat mit einer Nährstoffzusammensetzung von N= 12 %, P2O5 = 27 %, wobei davon 94 % neutral-ammoniumcitratlöslich und 78 % wasserlöslich sind. Das erzeugte Granulat weist eine stabile, runde und kompakte Granulatform auf.

### Ausführungsbeispiel 5 (nicht erfindungsgemäss):

Es werden in einem Mischgerät 50 kg Klärschlammasche als anorganisches Sekundärphosphat (P2O5-Gehalt 18 %, davon neutral-ammoniumcitratlöslich 38 % und <1 % wasserlöslich), 25 kg Salpetersäure (65 %ig) als Reaktionsmittel und 15 kg Wasser innig vermischt und so ein erdfeuchten bis plastisch leicht formbares Gemisch erzeugt. Der Feuchtegehalt dieses Gemischs beträgt 26 %. Anschließend wird eine Inkubationszeit von 45 Minuten eingehalten, wobei in dieser Zeit weiter gemischt wird.

Der Feststoffgehalt des so erzeugten erdfeuchten bis plastisch leicht formbares Gemisch liegt bei ca. 73,5 % und folglich die Feuchte bei 26,5 %.

Nach der Inkubationszeit werden 15 kg Harnstoff und 40 kg Monoammoniumphosphat (59 % P2O5, 11,5 % N) als feste Komponenten dem Gemisch zugeführt. Durch die Zugabe von Harnstoff und Monoammoniumphosphat nach der Inkubationszeit erhöht sich der Feststoffgehalt der so erzeugten erdfeuchten Rohstoffmischung von 73,5 % auf ca. 82 % und die Feuchte reduziert sich von 26,5 % auf 18 %.

Diese erdfeuchte Rohstoffmischung wird einem Granulierteller zugeführt, auf dem die Granulation zu Grüngranulaten erfolgt. Zur Einstellung der optimalen Konsistenz und Klebeneigung der erdfeuchten Mischung wird punktuell Wasser auf die erdfeuchte Mischung auf dem Granulierteller zugesprüht.

Anschließend erfolgt die Trocknung der Granulate auf einen Feuchtegehalt von 3 % und es bildet sich das Düngergranulat mit einer Nährstoffzusammensetzung von N= 12 %, P2O5 = 27 %, wobei davon 91 % neutral-ammoniumcitratlöslich und 73 % wasserlöslich sind. Das erzeugte Granulat weist eine stabile, runde und kompakte Granulatform auf.

### Ausführungsbeispiel 6 (nicht erfindungsgemäss):

Es wird ein Düngergranulat analog zu Ausführungsbeispiel 5, jedoch mit der folgender Verfahrensvariante hergestellt.

Das erzeugte Düngergranulat wird fraktioniert. Die Fraktionen kleiner 2 mm und größer 5 mm zusammen betragen ca. 20 % und werden auf Pulverfeinheit vermahlen.

Diese vermahlene Grob- und Feinfraktion wird nach der Inkubationszeit dem erdfeuchten bis plastisch leicht formbares Gemisch neben Harnstoff und Monoammoniumphosphat zugegeben.

Durch die im Vergleich zu Ausführungsbeispiel 5 zusätzliche zugeführte aufgemahlenen Grob- und Feinfraktion resultiert ein geringerer Feuchteanteil in der so erzeugten erdfeuchten Mischung. Dieser geringere Feuchteanteil wird beim Granulationsprozess durch Zuführen einer adäquaten Menge an Wasser durch Aufsprühen auf die erdfeuchte Mischung auf dem Granulierteller ausgeglichen. Alternativ kann die benötigte Wassermenge auch bereits im Prozessschritt a) oder b) zugegeben werden. Dadurch werden die Konsistenz und die Klebeneigung an den veränderten Prozess angepasst.

Nach der Trocknung und der Fraktionierung wird die Fraktion 2-5 mm als Produkt ausgeschleust, während die Grob- und Feinfraktion erneut aufgemahlen und dem Herstellprozess wieder zugeführt werden. Durch diese Art der Prozessführung fallen praktisch keine Abfallströme an.

### Ausführungsbeispiel 7 (nicht erfindungsgemäss):

In einem Intensivmischer (beispielsweise Fa. Eirich R16W) werden 200 kg Klärschlammasche als anorganisches Sekundärphosphat (P2O5-Gehalt 18 %, davon neutral-ammoniumcitratlöslich 38 % und <1 % wasserlöslich), 60 kg Salpetersäure (65 %ig) als Reaktionsmittel und 80 kg Wasser innig vermischt und so ein erdfeuchten bis plastisch leicht formbares Gemisch erzeugt. Anschließend wird eine Inkubationszeit von 45 Minuten eingehalten, wobei in dieser Zeit weiter gemischt wird.

Der Feststoffgehalt des so erzeugten erdfeuchten bis plastisch leicht formbares Gemisch beträgt 70,2 % und folglich die Feuchte 29,8 %.

Nach der Inkubationszeit werden 300 kg Monoammoniumphosphat (59 % P2O5, 11,5 % N) als feste Komponente dem Gemisch zugeführt. Dadurch wird der Feuchteanteil des Gemischs von 29,8 % auf 18 % reduziert.

Als weitere Komponente wird diesem Gemisch 120 kg Klärschlamm (Trockensubstanz 35 % mit 82 % Organik und 38 % Kohlenstoff in der Trockensubstanz) als Strukturstoff zugemischt. Dadurch erhöht sich der Feuchteanteil des Gemischs von 18 % auf 25,5 %, liegt damit jedoch niedriger als erdfeuchten bis plastisch leicht formbares Gemisch (29,5%). Im Intensivmischer werden alle Komponenten intensiv gemischt, wobei sich das Grüngranulat bildet.

Anschließend erfolgt die Trocknung der Granulate auf einem Bandtrockner (Konvektionstrockner), wobei das Material für 20 Minuten oberhalb 75 °C getrocknet und dabei der integrierte Klärschlamm ausreichend hygenisiert werden. Es resultiert ein Feuchtegehalt von 2 % und es bildet sich das Düngergranulat mit einem P2O5-Gesamtgehalt von 38 %, wobei davon 94 % neutral-ammoniumcitratlöslich und 83 % wasserlöslich sind. Im erzeugten Granulat sind ca. 7 % getrockneter Klärschlamm enthalten. Dieser Anteil führt zu einer Strukturierung der Granulate, damit diese Granulate in der Anwendung ein besonders gutes Löseverhalten aufweisen.

### Ausführungsbeispiel 8 (nicht erfindungsgemäss):

In einem Mischbehälter werden 100 kg Klärschlammasche als anorganisches Sekundärphosphat (P2O5-Gehalt 18 %, davon neutral-ammoniumcitratlöslich 38 % und <1 % wasserlöslich), 20 kg Phosphorsäure (72,5 %ig) als Reaktionsmittel und 50 kg Wasser innig vermischt und so ein erdfeuchten bis plastisch leicht formbares Gemisch erzeugt. Das so erzeugte Gemisch weißt einen Feuchtegehalt von 32,6 % auf. Anschließend wird eine Inkubationszeit von 45 Minuten eingehalten, wobei in dieser Zeit weiter gemischt wird.

Nach der Inkubationszeit werden 36 kg Harnstoff und 100 kg Struvit jeweils in Pulverform als feste Komponente dem Gemisch zugeführt. Dadurch wird der Feuchteanteil des Gemischs auf 19 % reduziert und es bildet sich die erdfeuchte Rohstoffmischung.

Diese erdfeuchte Rohstoffmischung wird einem Granulierteller zugeführt, auf dem die Granulation zu Grüngranulaten erfolgt. Vorzugsweise kanndie Konsistenz und Klebeneigung der erdfeuchten Mischung punktuell an den Prozess beispielsweise durch Zugabe von Wasser angepasst werden. Auch kann ein trockener Pulverstoff (beispielsweise Klärschlammasche) als Trennmittel eingesetzt werden, um einer Verklumpung der Grüngranulate vorzubeugen.

Anschließend erfolgt die Trocknung der Granulate bei 130 °C und es bildet sich das Düngergranulat mit einer Nährstoffzusammensetzung von N= 12 %, P2O5=27%, wobei davon 92 % neutral-ammoniumcitratlöslich und 12 % wasserlöslich sind und S = 5 %. Das erzeugte Granulat weist eine stabile, runde und kompakte Granulatform auf.

### Ausführungsbeispiel 9 (nicht erfindungsgemäss):

In einem Mischbehälter werden 100 kg Klärschlammasche als anorganisches Sekundärphosphat (P2O5-Gehalt 18 %, davon neutral-ammoniumcitratlöslich 38 % und <1 % wasserlöslich), 50 kg Schwefelsäure (80 %ig) als Reaktionsmittel und 30 kg Wasser innig vermischt und so ein erdfeuchten bis plastisch leicht formbares Gemisch erzeugt. Das so erzeugte Gemisch weißt einen Feuchteanteil von 22 % auf. Anschließend wird eine Inkubationszeit von 45 Minuten eingehalten, wobei in dieser Zeit weiter gemischt wird.

Nach der Inkubationszeit wird 50 kg Struvit in Pulverform als feste Komponente dem Gemisch zugeführt. Dadurch wird der Feuchteanteil des Gemischs auf 17 % reduziert und es bildet sich die erdfeuchte Rohstoffmischung.

Diese erdfeuchte Rohstoffmischung wird einem Granulierteller zugeführt, auf dem die Granulation zu Grüngranulaten erfolgt. Vorzugsweise kann die Konsistenz und Klebeneigung der erdfeuchten Mischung punktuell an den Prozess beispielsweise durch Zugabe von Wasser angepasst werden. Auch kann ein trockener Pulverstoff (beispielsweise Klärschlammasche) als Trennmittel eingesetzt werden, um einer Verklumpung der Grüngranulate vorzubeugen.

Anschließend erfolgt die Trocknung der Granulate und es bildet sich das Düngergranulat mit einer Nährstoffzusammensetzung von P2O5 = 20 %, wobei davon 94 % neutral-ammoniumcitratlöslich und kleiner 5 % wasserlöslich sind und S = 8 %, entsprechend einem Superphosphat mit Schwefelanteil. Das erzeugte Granulat weist eine stabile, runde und kompakte Granulatform auf.

Die Erfindung wird anhand der nachfolgenden Figuren näher beschrieben; es zeigt:
- Figur 1: schematisch Darstellung eines Teils der der Erfindung
- Figur 2: schematisch Darstellung eines Teils der der Erfindung

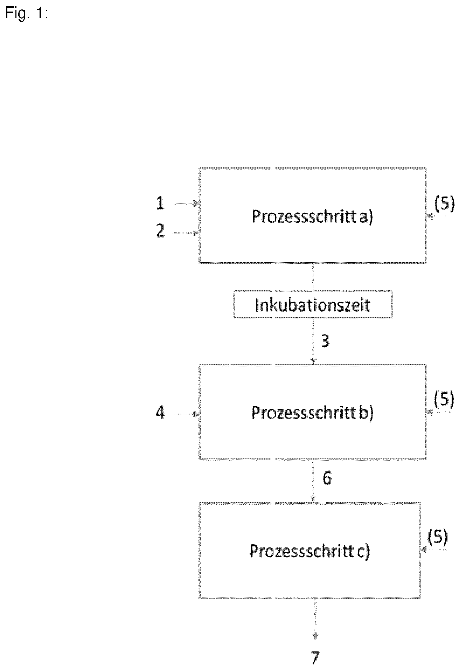

Figur 1 beschreibt einen Teil des erfindungsgemäßen Verfahrens. Im Prozessschritt a) wird ein erdfeuchtes bis plastisch leicht formbares Gemisch (3) aus mindestens einem anorganischen Sekundärphosphat (1) und mindestens einem flüssigen Reaktionsmittel (2) erzeugt. Anders als aus Verfahren aus dem Stand der Technik bekannt wird im Prozessschritt a) keine Suspension erzeugt. Zwar kann eine Suspension homogen gemischt werden und die Reaktion zwischen Asche und Säure kann in gewissen Grenzen abgepuffert werden, aber die zugeführte große Menge an flüssiger Phase (zumeist Wasser) muss anschließend entweder in einem weiteren Verfahrensschritt mechanisch oder energetisch abgetrennt werden, was aufwendig und teuer ist.

In diesem Prozessschritt a) erfolgt die weitgehende Umwandlung der unlöslichen Phosphatbestandteile des mindestens einen sekundären Phosphatträgers (1) durch die Einwirkung mindestens eines Reaktionsmittels (2) zumindest teilweise in eine leichter lösliche Phosphatform. Damit diese Reaktion zumindest zu einem großen Anteil zunächst ablaufen kann, wird eine Inkubationszeit von 10 bis 500 Minuten eingehalten, wobei das Gemisch weiter gemischt werden kann. Die erfindungsgemäße Trennung der Reaktion zur zumindest anteiligen Phosphatumwandlung aus dem anorganischen Sekundärphosphat von der Granulation löst das technische Problem, dass die exotherme, zum Teil spontan und heftig ablaufende Reaktion den Granulationsprozess stark behindert. Die erfindungsgemäße Trennung der Reaktion und Granulation ist dabei insbesondere im technischen Sinne zu verstehen. Vorzugsweise erfolgt im Prozessschritt a) der weitaus größte Anteil der Reaktion, jedoch kann die Reaktion auch im Prozessschritt b) und c) fortlaufen, dann jedoch in deutlich verminderter Intensität. Durch das Einhalten der erfindungsgemäßen Inkubationszeit von 10 bis 500 min ist die dann noch vorhandene Intensität des möglichen Fortlaufens der Reaktion nicht mehr für den Granulationsprozess hinderlich.

Im Prozessschritt b) wird dem erdfeuchten bis plastisch leicht formbaren Gemisch (3) aus Prozessschritt a), d.h. dem ersten Gemisch im Sinne der Erfindung, mindestens eine feste Komponente (4) zugeführt und damit wird der Feuchteanteil der dann resultierenden erdfeuchten Rohstoffmischung (6) im Vergleich zum Gemisch aus Prozessschritt a) reduziert. In diesem Prozessschritt wird die Rohstoffmischung (6) so konditioniert und im Feuchtegehalt eingestellt, dass es für die nachfolgende Granulation oder Extrusion geeignet ist.

In den Prozessschritten a) und/oder b) können weitere Komponenten (5), beispielsweise nährstoffhaltige Komponenten, Dispergier- und Entschäumungsmittel, Strukturstoffe, Mittel zur pH-Werteinstellung, Urease-Hemmer, Ammonium-Stabilisatoren, Huminsäure, organische Säuren und/oder Wasser, zugegeben werden. Im Prozessschritt a) läuft die Reaktion zwischen anorganischem Sekundärphosphat und Reaktionsmittel und ab. Im Prozessschritt b) erfolgt die Reaktion vorzugsweise so, dass eine erdfeuchte Rohstoffmischung (6) mit einem geringeren Feuchtegehalt als im Vergleich zu dem erdfeuchten bis plastisch leicht formbaren Gemisch (3) aus Prozessschritt a) erzeugt wird. Der gemittelte Feuchtegehalt aller im Prozessschritt b) zugegebener festen Komponenten (4) und/oder weiteren Komponenten (5) ist vorzugsweise niedriger als der Feuchtegehalt des erdfeuchten bis plastisch leicht formbaren Gemisch (3) aus Prozessschritt a) sein.

Im Prozessschritt c) erfolgen die Granulierung/Extrusion der erdfeuchten Rohstoffmischung (6) und gegebenenfalls eine Trocknung. Es resultiert das erfindungsgemäße Nährstoffgranulat (7). Vor und/oder während der Granulierung können auch weitere Komponenten (5) zugeführt werden. Gegebenenfalls wird den erzeugten Grüngranulaten ein feinteiliges Pulver als Trennmittel zugeführt. Aus diesem Prozessschritt c) resultieren boden- und pflanzenspezifischen Nährstoffgranulate (7) mit eingestellter und gleichbleibender Nährstoffzusammensetzung, wobei zumindest als eine Nährstoffquelle anorganisches Sekundärphosphat (wie beispielsweise Klärschlammaschen) eingesetzt wurde, wobei das darin enthaltene Phosphat durch einwirken des Reaktionsmittels besser löslich und besser pflanzenverfügbar gemacht wurde.

Die Prozessschritte a) bis c) können beliebig oft wiederholt werden, dabei parallel oder seriell durchgeführt werden.

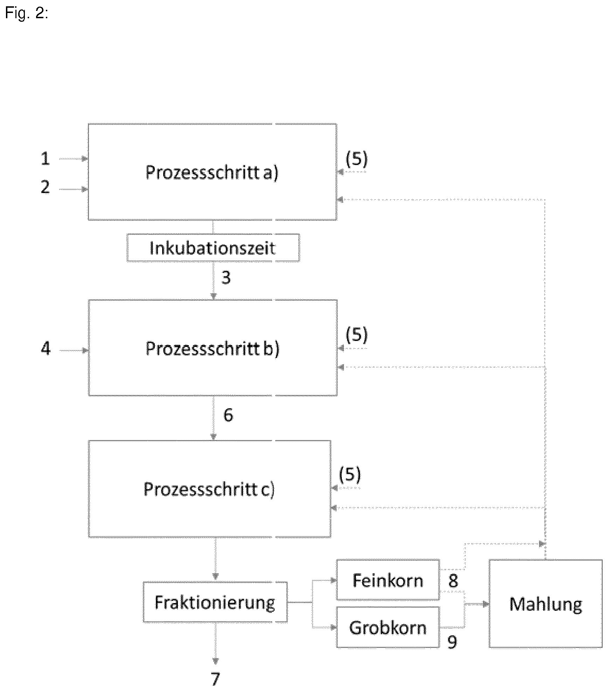

Figur 2 zeigt einen Teil einer bevorzugten Ausführungsform der Erfindung, insbesondere die zusätzlich mögliche Fraktionierung des erzeugten Nährstoffgranulates und die Möglichkeiten zur Rückführung des abgetrennten Grob- und Feinkorns. Dazu wird das erzeugte Nährstoffgranulat nach der Granulierung und Trocknung fraktioniert. Das Gutkorn (7) wird aus dem Prozess als Produkt ausgeschleust.

Die Grobkornfraktion wird aufgemahlen (9). Die Feinkornfraktion kann ebenfalls entweder gemeinsam mit dem Grobkorn oder davon separat aufgemahlen werden oder es kann auch ohne Aufmahlung zurückgeführt werden.

Diese aufgemahlene Grobkornfraktion (9) kann gemeinsam mit der aufgemahlenen oder nicht-aufgemahlenen Feinkornfraktion (8) dem Prozessschritten a), b) und/oder c) je nach Erfordernis an die Prozessführung zugeführt werden. Die aufgemahlene Grobkornfraktion (9) und die aufgemahlene oder nicht-aufgemahlene Feinkornfraktion (8) können auch separat voneinander den gleichen oder unterschiedlichen Prozessschritten a), b) und/oder c) zugeführt werden. Bei Zuführung der aufgemahlene Grobkornfraktion (9) und/oder der aufgemahlenen oder nicht-aufgemahlenen Feinkornfraktion (8) zu Prozessschritt b) kann dies beispielsweise als erfindungsgemäße feste Komponente zur entsprechenden Reduzierung der Feuchtigkeit in der resultierenden Mischung dienen. Die Zuführung der nicht-aufgemahlenen Feinfraktion (8) und/oder der aufgemahlenen Grobfraktion (9) kann in dem Prozessschritt b) und/oder c) kann beispielsweise auch zur Unterstützung der Granulation als Granulationskeim dienen. In einer anderen Ausführungsform kann die Zuführung der aufgemahlenen Grob- und/oder Feinkornfraktion in den Prozessschritt c) beispielsweise als Trennmittel fungieren, um die gebildeten Grüngranulate durch Reduzierung der Klebeneigung an der Oberfläche voneinander zu trennen.

### Bezugszeichenliste:

- 1: anorganisches Sekundärphosphat bzw. sekundärer Phosphatträger
- 2: Reaktionsmittel
- 3: erdfeuchtes bis plastisch formbares Gemisch, erstes Gemisch
- 4: feste Komponente(n)
- 5: weitere Komponente(n)
- 6: erdfeuchte Rohstoffmischung (zweites Gemisch)
- 7: Düngemittelgranulat, Gutkorn, Nährstoffgranulat
- 8: Feinfraktion des Düngemittelgranulats
- 9: Grobfraktion des Düngemittelgranulats

## Patentansprüche

1. Verfahren zur Herstellung eines Nährstoffgranulats (7) gemäß Anspruch 6 umfassend die folgenden Schritte:
a) Erzeugung eines ersten Gemischs (3) mit einem Feuchtegehalt von 10 - 45 % umfassend mindestens ein anorganisches Sekundärphosphat (1) und mindestens ein flüssiges Reaktionsmittel (2), wobei das Reaktionsmittel ausgewählt ist aus organischen oder anorganischen Säuren oder Säuregemischen, oder Laugen, oder Gemische aus unterschiedlichen Laugen, jeweils in unverdünnter oder verdünnter Form,
wobei eine Inkubationszeit zwischen dem anorganischem Sekundärphosphat (1) und dem Reaktionsmittel (2) in einem Bereich von 10 bis 500 Minuten liegt,
b) Reduzierung des Feuchtegehalts des ersten Gemischs (3) durch Zuführung von mindestens einer festen Komponente (4), wodurch ein zweites Gemisch erhalten wird, das eine Rohstoffmischung (6) mit einem Feuchteanteil von weniger als 35 % darstellt,
c) Granulierung und/oder Extrudierung der Rohstoffmischung (6) mittels eines Pelletier- oder Granuliertellers, einer Granuliertrommel oder ein Intensivmischer, wodurch das Nährstoffgranulats (7) erhalten wird, und
Wiederholen der Prozessschritte a) bis c), wobei die Schritte parallel oder seriell durchgeführt werden.

2. Verfahren nach Anspruch 1
**dadurch gekennzeichnet, dass**
bei oder im Anschluss an die Granulierung und/oder Extrudierung der Rohstoffmischung (6) eine Trocknung erfolgt.

3. Verfahren nach einem oder mehreren der vorangehenden Ansprüche,
**dadurch gekennzeichnet, dass**
ein pH-Wert des ersten Gemischs (3) und/oder der Rohstoffmischung (6) nach der Inkubationszeit in einem Bereich von 4-8 liegt.

4. Verfahren nach einem oder mehreren der vorangehenden Ansprüche,
**dadurch gekennzeichnet, dass**
das Verfahren eine Fraktionierung des erzeugten Nährstoffgranulates (7) umfasst, wobei eine Grobfraktion (9) und/oder eine Feinfraktion (8) aufgemahlen und dem ersten Gemisch (3), der Rohstoffmischung (6) und/oder dem Granulationsschritt (7) zumindest teilweise zuführbar ist.

5. Verfahren nach einem oder mehreren der vorangehenden Ansprüche, **dadurch gekennzeichnet, dass**
in Summe 1 bis 70 % Kristallisationsprodukte aus der Phosphorelimination dem Schritt a), b) und/oder c) zugeführt werden, wobei eine Trocknung oberhalb 100°C bezogen auf die Materialtemperatur bei der Trocknung erfolgt.

6. Nährstoffgranulat (7) herstellbar mit einem Verfahren nach Anspruch 1 bis 5, welches mindestens ein anorganisches Sekundärphosphat (1) umfasst, wobei eine Neutralammoniumcitratlöslichkeit eines mit dem anorganischen Sekundärphosphat (1) zugeführten Phosphats im Nährstoffgranulat größer 60 % neutral-ammoniumcitratlöslich ist, und ein Phosphatanteil aus dem anorganischen Sekundärphosphat (1) eine Wasserlöslichkeit von kleiner 40 % aufweist.

7. Nährstoffgranulat (7) nach Anspruch 6,
**dadurch gekennzeichnet, dass**
das Nährstoffgranulat (7) 0,1 bis 25 % Huminsäure, Fulvosäure, deren Salze (Humate, Fulvate) und/oder 0,1 bis 30 % organische Säure und/oder 0,1 bis 50 % Strukturstoffe umfasst.

8. Nährstoffgranulat (7) nach einem oder mehrere Ansprüche 6 bis 7,
**dadurch gekennzeichnet, dass**
ein oder mehrere Kristallisationsprodukte aus einer Phosphorelimination in einem Konzentrationsbereich zwischen 1 und 70 % enthalten sind.

9. Verwendung des Nährstoffgranulats (7) nach einem oder mehreren der Ansprüche 6 bis 8 in der Landwirtschaft, Forstwirtschaft und/oder im Gartenbau,
**dadurch gekennzeichnet, dass**
das Nährstoffgranulat (7) mindestens ein anorganisches Sekundärphosphat (1) umfasst, sowie einen größer 60 % neutral-ammoniumcitratlöslichen P₂O₅-Anteil zur Nährstoffzufuhr.

## Claims

1. A method for producing a fertilizer granulate (7) according to claim 6, comprising the following steps:
a) producing a first mixture (3) with a moisture content of 10 - 45% comprising at least one inorganic secondary phosphate (1) and at least one liquid reactant (2), wherein the reactant is selected from organic or inorganic acids or acid mixtures, or alkalis, or mixtures of different alkalis, each in undiluted or diluted form,
wherein the incubation time between the inorganic secondary phosphate (1) and the reactant (2) is in the range of 10 to 500 minutes,
b) reducing the moisture content of the first mixture (3) by adding at least one solid component (4), resulting in a second mixture which is a raw material mixture (6) with a moisture content of less than 35%,
c) granulating and/or extruding the raw material mixture (6) using a pelletizing or granulating disc, a granulating drum or an intensive mixer, resulting in the fertilizer granulate (7), and
repeating process steps a) to c), wherein the steps are performed in parallel or serially.

2. The method according to claim 1
**characterized in that**
drying takes place during or following the granulating and/or extruding of the raw material mixture (6).

3. The method according to any one of the preceding claims,
**characterized in that**
a pH value of the first mixture (3) and/or of the raw material mixture (6) after the incubation time is in a range of 4-8.

4. The method according to any one of the preceding claims,
**characterized in that**
the method comprises fractioning the produced fertilizer granulate (7), wherein a coarse fraction (9) and/or a fine fraction (8) is ground up and can be at least partially added to the first mixture (3), the raw material mixture (6) and/or the granulation step (7).

5. The method according to any one of the preceding claims,
**characterized in that**
in total, 1 to 70% of the crystallization products from the phosphorus elimination are supplied to step a), b) and/or c), wherein drying takes place above 100°C relative to the material temperature during drying.

6. A fertilizer granulate (7), which can be produced by a method according to claims 1 to 5, which comprises at least one inorganic secondary phosphate (1), wherein a neutral ammonium citrate solubility of a phosphate supplied with the inorganic secondary phosphate (1) in the fertilizer granulate is greater than 60% neutral ammonium citrate soluble, and a phosphate fraction from the inorganic secondary phosphate (1) has a water solubility of less than 40%.

7. The fertilizer granulate (7) according to claim 6,
**characterized in that**
the fertilizer granulate (7) comprises 0.1 to 25% humic acid, fulvic acid, their salts (humates, fulvates) and/or 0.1 to 30% organic acid and/or 0.1 to 50% structural materials.

8. The fertilizer granulate (7) according to one or more of claims 6 to 7,
**characterized in that**
one or more crystallization products from phosphorus elimination are contained in a concentration range between 1 and 70%.

9. Use of the fertilizer granulate (7) according to one or more of claims 6 to 8 in agriculture, forestry and/or horticulture,
**characterized in that**
the fertilizer granulate (7) comprises at least one inorganic secondary phosphate (1) and a P₂O₅ content soluble in neutral ammonium citrate of greater than 60% for nutrient supply.

## Revendications

1. Procédé de production d'un granulé nutritif (7) selon la revendication 6, comprenant les étapes suivantes :
a) Production d'un premier mélange (3) avec une teneur en humidité de 10 à 45 % comprenant au moins un phosphate secondaire inorganique (1) et au moins un réactif liquide (2), dans lequel le réactif est choisi parmi les acides organiques ou inorganiques ou les mélanges d'acides, ou les alcalis, ou les mélanges de différents alcalis, chacun sous forme non diluée ou diluée,
dans lequel un temps d'incubation entre le phosphate secondaire inorganique (1) et le réactif (2) est compris dans une plage de 10 à 500 minutes,
b) Réduction de la teneur en humidité du premier mélange (3) par l'ajout d'au moins un composant solide (4), moyennant quoi un second mélange est obtenu, lequel est un mélange de matières premières (6) avec une teneur en humidité inférieure à 35 %,
c) Granulation et/ou extrusion du mélange de matières premières (6) à l'aide d'un disque de granulation ou de pelletisation, d'un tambour de granulation ou d'un mélangeur intensif, moyennant quoi les granulés nutritifs (7) sont obtenus, et Répétition des étapes du processus a) à c), dans lequel les étapes sont effectuées en parallèle ou en série.

2. Procédé selon la revendication 1
**caractérisé en ce que**
un séchage a lieu pendant ou après la granulation et/ou l'extrusion du mélange de matières premières (6).

3. Procédé selon l'une ou plusieurs des revendications précédentes,
**caractérisé en ce que**
une valeur de pH du premier mélange (3) et/ou du mélange de matières premières (6) après le temps d'incubation se situe dans une plage de 4 à 8.

4. Procédé selon l'une ou plusieurs des revendications précédentes,
**caractérisé en ce que**
le procédé comprend un fractionnement des granulés nutritifs produits (7), dans lequel une fraction grossière (9) et/ou une fraction fine (8) est broyée et peut être au moins partiellement ajoutée au premier mélange (3), au mélange de matières premières (6) et/ou à l'étape de granulation (7).

5. Procédé selon l'une ou plusieurs des revendications précédentes, **caractérisé en ce que**
au total, 1 à 70 % des produits de cristallisation issus de l'élimination du phosphore sont ajoutés à l'étape a), b) et/ou c), dans lequel un séchage a lieu à plus de 100 °C par rapport à la température de matériau pendant le séchage.

6. Granulés nutritifs (7) pouvant être produits par un procédé selon les revendications 1 à 5, comprenant au moins un phosphate secondaire inorganique (1), dans lequel une solubilité dans le citrate d'ammonium neutre d'un phosphate fourni avec le phosphate secondaire inorganique (1) dans les granulés nutritifs est supérieure à 60 % et une fraction de phosphate provenant du phosphate secondaire inorganique (1) présente une solubilité dans l'eau inférieure à 40 %.

7. Granulés nutritifs (7) selon la revendication 6,
**caractérisés en ce que**
les granulés nutritifs (7) comprennent 0,1 à 25 % d'acide humique, d'acide fulvique, de leurs sels (humates, fulvates) et/ou 0,1 à 30 % d'acide organique et/ou 0,1 à 50 % de composants structuraux.

8. Granulés nutritifs (7) selon l'une ou plusieurs des revendications 6 à 7,
**caractérisés en ce que**
un ou plusieurs produits de cristallisation issus de l'élimination du phosphore sont présents dans une gamme de concentration comprise entre 1 et 70 %.

9. Utilisation des granulés nutritifs (7) selon l'une ou plusieurs des revendications 6 à 8 en agriculture, en sylviculture et/ou en horticulture,
**caractérisée en ce que**
les granulés nutritifs (7) comprennent au moins un phosphate secondaire inorganique (1) ainsi qu'une teneur en P₂O₅ supérieure à 60 % soluble dans le citrate d'ammonium neutre pour l'apport de nutriments.
